# NEUE EUROPÄISCHE PATENTSCHRIFT

(11) **EP 3 456 554 B2**
(45) Veröffentlichungstag und Bekanntmachung des Hinweises auf die Entscheidung über den Einspruch: **26.11.2025**
(45) Hinweis auf die Patenterteilung: 10.03.2021
(21) Anmeldenummer: 18191273.4
(22) Anmeldetag: 28.08.2018
(51) Int. Cl.: B60D 1/06, B60D 1/64

(54) **ANHÄNGEKUPPLUNG**
TRAILER COUPLING
ATTELAGE DE REMORQUE

(30) Priorität: 14.09.2017 DE 102017121357
(43) Veröffentlichungstag der Anmeldung: 20.03.2019
(73) Patentinhaber: ACPS Automotive GmbH, 74379 Ingersheim (DE)
(72) Erfinder: Burkhardt, Volker, 71696 Möglingen (DE); Dr. Widmann, Michael, 71229 Leonberg (DE)
(74) Vertreter: Hoeger, Stellrecht & Partner Patentanwälte mbB

(56) Entgegenhaltungen:
- EP-A2- 2 952 368
- WO-A1-2018/046658
- DE-A1- 102015 100 490
- DE-A1- 102016 117 017
- DE-B4- 4 342 981
- DE-U1- 202013 000 779
- DE-U1- 29 920 666
- US-A- 2 671 675
- US-A- 4 509 770
- US-A- 4 955 968
- US-A- 5 037 122
- US-A- 5 421 601
- US-A1- 2003 085 548
- US-A1- 2006 017 261
- US-A1- 2010 133 785
- US-B1- 6 412 806
- US-B1- 9 114 678
- US-B2- 9 464 953

## Beschreibung

Die Erfindung betrifft eine Anhängekupplung umfassend eine fahrzeugfest montierte Montageeinheit, eine an der Montageeinheit gehaltene Lagereinheit, mit welcher ein erster Endbereich einer Tragstruktur eines Kugelhalses verbunden ist, und ein an einem zweiten Endbereich der Tragstruktur des Kugelhalses angeordnetes Kuppelelement, insbesondere ausgebildet als Kupplungskugel.

Derartige Anhängekupplungen sind beispielsweise aus der DE 10 2015 100 490 A1 bekannt. Eine weitere Anhängekupplung ist aus der nicht vorveröffentlichten WO 2018/046658 A1 bekannt. Die US 9464953 B2 zeigt eine Anhängekupplung mit den Merkmalen des Oberbegriffs des Anspruchs 1, wobei die Strebenstruktur seitliche Vertiefungen aufweist, die durch struktursteife Abdeckungen überdeckt sind.

Bei diesen Anhängekupplungen ist der Kugelhals üblicherweise als massives Bauteil, insbesondere als Schmiedeteil, ausgebildet und hat daher eine große Masse.

Der Erfindung liegt daher die Aufgabe zugrunde, eine Anhängekupplung der gattungsgemäßen Art derart zu verbessern, dass diese eine geringere Masse aufweist.

Diese Aufgabe wird bei einer Anhängekupplung der eingangs beschriebenen Art erfindungsgemäß dadurch gelöst, dass die Tragstruktur des Kugelhalses eine den ersten Endbereich mit dem zweiten Endbereich verbindende und den zweiten Endbereich relativ zum ersten Endbereich abstützende Strebenstruktur umfasst, welche sich in der Arbeitsstellung des Kugelhalses beiderseits einer geometrischen und sich zu einer Mittelachse des Kupplungselements parallel erstreckenden Mittelfläche ausdehnt und jeweils von einem Endbereich zum anderen Endbereich verlaufende Längsstreben aufweist, zwischen denen sich mindestens zwei quer zu den Längsstreben verlaufende Verbindungselemente erstrecken und dass zwischen den Längsstreben mindestens zwei sich quer zu der geometrischen Mittelfläche erstreckende Freiräume liegen.

Der Vorteil der erfindungsgemäßen Lösung ist darin zu sehen, dass diese die Möglichkeit eröffnet, die Masse des Kugelhalses bei nach wie vor ausreichender Stabilität zu reduzieren.

Eine besonders vorteilhafte Lösung sieht vor, dass der Kugelhals von dem ersten Ende zum zweiten Ende gekrümmt, und zwar von der Fahrbahn weg gekrümmt, verläuft, so dass insbesondere eine in Arbeitsstellung des Kugelhalses einer Fahrbahn zugewandte Längsstrebe eine größere Längenausdehnung aufweist als eine der Fahrbahn abgewandte Längsstrebe.

Um die Längsstreben mit der notwendigen Stabilität ausbilden zu können, ist vorzugsweise vorgesehen, dass die der Fahrbahn zugewandte Längsstrebe sich beiderseits der geometrischen Mittelfläche erstreckt.

Besonders günstig ist es, wenn die der Fahrbahn zugewandte Längsstrebe sich symmetrisch zur geometrischen Mittelfläche erstreckt.

Darüber hinaus ist es ebenfalls vorteilhaft, wenn eine in der Arbeitsstellung der Fahrbahn abgewandten Längsstrebe sich beiderseits der geometrischen Mittelfläche erstreckt.

Ferner ist es ebenfalls von Vorteil, wenn die der Fahrbahn abgewandte Längsstrebe sich symmetrisch zu der geometrischen Mittelfläche erstreckt.

Prinzipiell könnten die Längsstreben geradlinig zwischen dem ersten Endbereich und dem zweiten Endbereich verlaufen.

Erfindungsgemäß ist vorgesehen, dass die der Fahrbahn zugewandte Längsstrebe mindestens einen Krümmungsbereich aufweist, dessen mindestens ein Krümmungsmittelpunkt auf einer der Fahrbahn abgewandten Seite der der Fahrbahn zugewandten Längsstrebe liegt.

Ferner ist erfindungsgemäß vorgesehen, dass die der Fahrbahn abgewandte Längsstrebe Krümmungsbereiche aufweist, deren Krümmungsmittelpunkte auf einer der Fahrbahn abgewandten Seite derselben liegen.

Es hat sich jedoch als günstig erwiesen, wenn die der Fahrbahn abgewandte Längsstrebe mindestens einen Krümmungsbereich aufweist, dessen Krümmungsmittelpunkt auf einer der Fahrbahn zugewandten Seite der Längsstrebe liegt.

Ferner sieht eine besonders günstige Lösung vor, dass auf mindestens einer Seite eines Verbindungselements mindestens ein sich in der Strebenstruktur quer zur Mittelfläche erstreckender Freiraum liegt.

Erfindungsgemäß ist vorgesehen, dass beiderseits eines Verbindungselements jeweils mindestens ein sich quer zur Mittelfläche erstreckender Freiraum liegt.

Insbesondere sind die Verbindungselemente Verbindungsstreben und/oder Verbindungswände, die die Längsstreben miteinander zu der Strebenstruktur verbinden und damit die Steifigkeit erhöhen.

Besonders günstig ist es, wenn die Strebenstruktur mindestens einen Freiraum aufweist, der die Strebenstruktur in Richtung quer zur Mittelfläche insgesamt durchsetzt.

Eine andere vorteilhafte Lösung sieht vor, dass die Strebenstruktur mindestens einen Freiraum aufweist, welcher sich quer zu der Mittelfläche erstreckt, jedoch durch eine sich zwischen den Längsstreben erstreckende Verbindungswand der Strebenstruktur abgeschlossen ist.

Wie im Zusammenhang mit den voranstehenden Ausführungsformen dargelegt, dienen die sich bildenden Freiräume zwischen den Längsstreben dazu, die Masse des Kugelhalses zu reduzieren.

Gleichzeitig eröffnen die Freiräume jedoch weitere konstruktive Möglichkeiten.

So sieht eine vorteilhafte Lösung vor, dass mindestens einer der Freiräume einen Aufnahmeraum für mindestens eine am Kugelhals anzuordnende Funktionseinheit bildet.

Insbesondere ist die Funktionseinheit eine elektrische oder elektronische Funktionseinheit.

Damit lassen sich die Freiräume bei der erfindungsgemäßen Lösung noch besonders günstig zur Integration der Funktionseinheit in den Kugelhals einsetzen.

Beispielsweise sieht eine vorteilhafte Lösung vor, dass die mindestens eine Funktionseinheit eine Kontakteinheit für eine Verbindung zwischen einem elektrischen Fahrzeugnetz und einem elektrischen Netz einer am Kuppelelement ankuppelbaren Einheit, beispielsweise einem Anhängernetz, ist.

Eine weitere vorteilhafte Lösung sieht vor, dass die Funktionseinheit eine Betriebszustandserfassungseinheit aufweist, welche beispielsweise Betriebszustände der Anhängekupplung und/oder der angehängten Einheit erfasst.

Ein Betriebszustand ist beispielsweise das Vorhandensein oder Nichtvorhandensein einer angehängten Einheit, beispielsweise eines Anhängers, und/oder Funktionszustände eines elektrischen Netzes der angehängten Einheit.

Ein weiterer Betriebszustand ist beispielsweise eine Ausrichtung der angehängten Einheit, beispielsweise eines Anhängers, relativ zum Kugelhals.

Ein weiterer Betriebszustand ist beispielsweise eine Belastung des Kugelhalses, beispielsweise in Form einer statischen und/oder dynamischen Belastung des Kugelhalses in der Arbeitsstellung bei fahrendem und/oder nicht fahrendem Fahrzeug.

Ein weiterer Betriebszustand ist beispielsweise die Schwenkstellung des Kugelhalses bezogen auf die Arbeitsstellung und die Ruhestellung und auch zwischen diesen liegenden Zwischenstellungen.

Ein weiterer Betriebszustand ist beispielsweise auch ein Zustand einer Verriegelungsvorrichtung, mit welcher der zwischen der Arbeitsstellung und der Ruhestellung verschwenkbare Kugelhals in der Arbeitsstellung und/oder der Ruhestellung fixierbar ist.

Dabei ist insbesondere die Information relevant, ob die Verriegelungsvorrichtung im verriegelten oder nicht verriegelten Zustand ist oder ob die Verriegelungsvorrichtung in einem Zwischenstand zwischen diesen Zuständen ist.

Diese Betriebszustände werden beispielsweise durch den Lagereinheiten beziehungsweise den Verriegelungsvorrichtungen zugeordnete Sensoren erfasst.

Zur Erfassung all dieser Betriebszustände umfasst die Funktionseinheit eine Auswerteschaltung und mit der Auswerteschaltung zusammenwirkende Sensoreinheiten, wie beispielsweise
- Schalter, Positionssensoren und Drehwinkelsensoren zur Überwachung von Positionen und relativen Orientierungen,
- Stromsensoren zur Überwachung von einem elektrischen Netz der angehängten Einheit,
- Dehnungssensoren und/oder Schwingungssensoren und/oder Lagesensoren und/oder Beschleunigungssensoren zur Überwachung von statischen und/oder dynamischen Belastungen des Kugelhalses.

Eine andere vorteilhafte Lösung sieht vor, dass die Funktionseinheit eine Anzeigesteuerung umfasst, mit welcher eine Anzeigeeinheit ansteuerbar ist.

Eine weitere vorteilhafte Lösung sieht vor, dass die Funktionseinheit eine Anzeigeeinheit ist.

Beispielsweise sieht eine vorteilhafte Lösung vor, dass eine der Anzeigesteuerung vorgeschaltete Funktionseinheit eine Einheit zur Erfassung von Funktionsparametern des Kugelhalses ist, wie beispielsweise eine Einheit zur Erfassung einer Stützlast, die auf den Kugelhals wirkt, die insbesondere auch in einem der Freiräume oder im Kugelhals angeordnete Sensoreinheiten umfasst.

Die der Anzeigesteuerung vorgeschaltete Funktionseinheit kann aber auch eine Beschleunigungserfassungseinheit und/oder eine Anhängerüberwachungseinheit und/oder eine Knickwinkelerfassungseinheit sein.

Ein weiteres Ausführungsbeispiel einer Funktionseinheit umfasst eine Beleuchtungseinheit, wobei insbesondere deren Lichtquelle in einem der Freiräume angeordnet ist und deren Licht über Lichtleiter zu Lichtaustrittselementen geführt ist.

Ein weiteres Ausführungsbeispiel einer Funktionseinheit umfasst eine Projektionseinheit, umfassend eine Bilderzeugungseinheit, deren Bild von einem Projektionselement auf eine externe Projektionsfläche projiziert wird.

Um jedoch der Strebenstruktur das bekannte gefällige Aussehen eines bekannten Kugelhalses zu verleihen ist vorzugsweise vorgesehen, dass die Strebenstruktur mit einer Verkleidung versehen ist.

Die Verkleidung könnte so ausgebildet sein, dass sie die Steifigkeit der Strebenstruktur steigert.

Im einfachsten Fall ist jedoch vorgesehen, dass die Strebenstruktur mit einer nicht tragenden Verkleidung versehen ist.

Eine für die Strebenstruktur nicht tragende Verkleidung bedeutet, dass die Verkleidung auf die mechanischen Eigenschaften der Strebenstruktur keinen oder nur unwesentlichen Einfluss hat und somit insbesondere die Strebenstruktur nicht zusätzlich wesentlich versteift, um deren mechanische Eigenschaften zu verbessern. Nicht wesentlich versteift bedeutet, dass sich die Steifigkeit um weniger als 10 %, noch besser weniger als 5 % erhöht.

Eine derartige Verkleidung schafft die Möglichkeit, dem Kugelhals, ohne dass bei der Ausbildung der Strebenstruktur hierauf Rücksicht genommen werden muss, ein gefälliges Aussehen zu verleihen.

Beispielsweise ist dabei vorgesehen, dass die Verkleidung zumindest ein Teil der Freiräume abdeckt.

Noch besser ist es, wenn die Verkleidung sämtliche Freiräume abdeckt.

Dabei kann die Verkleidung beispielsweise aus einem flexiblen Material hergestellt sein, welches die Strebenstruktur ganz oder teilweise umhüllt.

Darüber hinaus schafft das Vorsehen der Abdeckung die Möglichkeit, die Funktionseinheit zu schützen, beispielsweise gegen Wasserstrahlen und/oder Steinschläge.

Besonders günstig ist ferner eine Ausführung der Verkleidung, die lackierbare Oberflächenbereiche umfasst, so dass diese beispielsweise in der Fahrzeugfarbe lackiert werden können.

Die Erfindung sieht jedoch vor, dass die Verkleidung mindestens eine struktursteife Abdeckung, beispielsweise in Form eines oder mehrerer geformter Kunststoffteile, umfasst, die einerseits die Möglichkeit einer gewünschten Formgebung zulassen und andererseits für den dauerhaften Einsatz an einem Kugelhals geeignet sind.

Beispielsweise ist jedoch aber auch in diesem Fall die mindestens eine Abdeckung ein nichttragendes Element des Kugelhalses.

Erfindungsgemäß ist vorgesehen, dass die Freiräume durch die mindestens eine Abdeckung überdeckt sind.

Besonders günstig ist es in diesem Zusammenhang, wenn die Verkleidung mindestens zwei Abdeckungen umfasst, welche die Strebenstruktur im Bereich ihrer beiderseitigen Außenkonturen überdecken.

Eine besonders günstige Lösung sieht vor, dass mindestens ein Teil der Freiräume durch beiderseits der Mittelfläche und im Abstand von dieser Mittelfläche verlaufende Abdeckungen überdeckt ist.

Hinsichtlich der Fixierung der Abdeckungen wurden im Zusammenhang mit den bisherigen Ausführungsformen keine näheren Angaben gemacht.

So sieht eine vorteilhafte Lösung vor, dass die mindestens eine Abdeckung an der Strebenstruktur gehalten ist.

Besonders einfach lässt sich dies dadurch realisieren, dass die mehreren Abdeckungen einzeln an der Strebenstruktur gehalten sind.

Alternativ oder ergänzend hierzu ist ebenfalls vorgesehen, dass die mehreren Abdeckungen durch mindestens eine die Freiräume durchsetzende Verbindungseinheit miteinander verbunden sind.

Hinsichtlich der relativen Anordnung der mindestens einen Abdeckung zu der Strebenstruktur wurden bislang keine näheren Angaben gemacht.

So sieht eine vorteilhafte Möglichkeit vor, dass mindestens ein Teil der Verbindungselemente relativ zu der mindestens einen Abdeckungen zurückgesetzt in der Strebenstruktur verläuft, so dass diese den Verlauf und die Form der Abdeckung nicht beeinflussen kann.

Ferner ist vorzugsweise vorgesehen, dass die Strebenstruktur Auflagebereiche für die mindestens eine Abdeckung bildet, so dass die Abdeckung sich in einfacher Weise relativ zur Strebenstruktur abstützen und/oder fixieren lässt.

Insbesondere ist vorgesehen, dass die Strebenstruktur für die mindestens eine Abdeckung eine zusammenhängende Anlagekontur bildet, längs welcher die mindestens eine Abdeckung mit Anlagebereichen abschließend anliegen kann und auch gegebenenfalls fixiert werden kann.

Mehrere Abdeckungen können auch Teile einer U-förmig ausgebildeten Abdeckeinheit sein, die mit einem Mittelschenkel und seitlichen Schenkeln die Strebenstruktur beispielsweise auf drei Seiten umgreift.

Mehrere Abdeckungen, wie beispielsweise zwei Abdeckungen, können sich aber auch zu einer Abdeckeinheit ergänzen, die insgesamt die Strebenstruktur außenseitig, insbesondere vollumfänglich, umgreift.

Dies kann durch zwei Teilschalen, im einfachsten Fall zwei Halbschalen, erfolgen, die die Strebenstruktur insgesamt umgreifen.

Die mindestens eine Abdeckung lässt sich jedoch nicht nur dazu verwenden, der Strebenstruktur das gewohnte gefällige Aussehen eines Kugelhalses zu verleihen.

Eine besonders vorteilhafte Lösung sieht vor, dass die mindestens eine Funktionseinheit an mindestens einer Abdeckung gehalten ist, so dass die mindestens eine Funktionseinheit und die mindestens eine Abdeckung aneinander angepasst werden können.

Besonders vorteilhaft ist es, wenn die mindestens eine Funktionseinheit zumindest teilweise fest mit der Abdeckung verbunden ist, insbesondere in die Abdeckung integriert ist.

Grundsätzlich könnten die Funktionseinheiten sich noch zusätzlich zur Verbindung mit der Abdeckung an der Strebenstruktur abstützen.

Besonders günstig ist es jedoch, wenn die mindestens eine Funktionseinheit mittels der Abdeckung relativ zur Strebenstruktur fixiert ist.

Ferner ist vorzugsweise vorgesehen, dass an der mindestens einen Abdeckung eine zu einer Sensoreinheit und/oder einer Funktionseinheit geführte elektrische Leitung gehalten ist.

Außerdem ist es von Vorteil, wenn an der mindestens einen Abdeckung ein Kontaktverbinderelement gehalten ist.

Diese Lösungen haben den Vorteil, dass sie die Möglichkeit eröffnen mit der Montage der Abdeckung auch gleichzeitig die elektrische Leitung beziehungsweise die Kontaktverbindereinheit montieren zu können.

Hinsichtlich der Ausbildung der Abdeckung ist es ferner möglich, der Abdeckung nicht nur eine Formgebung zu verleihen, die den ästhetischen Eindruck des Kugelhalses beeinflusst.

Eine besonders günstige Lösung sieht vor, dass die mindestens eine Abdeckung mindestens eine als Anzeigeeinheit ausgebildete Funktionseinheit trägt.

Dabei kann die Anzeigeeinheit eine optische und/oder akustische Anzeigeeinheit sein.

Besonders günstig ist es, wenn die Funktionseinheit an mindestens zwei Abdeckungen gehalten ist und somit bereits durch die Abdeckungen stabil relativ zur Strebenstruktur positioniert werden kann.

Dies lässt sich insbesondere dann vorteilhaft ausnutzen, wenn die Funktionseinheit ein Verbindungselement zwischen den Abdeckungen darstellt.

Weitere Merkmale und Vorteile der vorliegenden Erfindung sind Gegenstand der nachfolgenden Beschreibung sowie der zeichnerischen Darstellung einiger Ausführungsbeispiele.

In der Zeichnung zeigen:
- Fig. 1: eine rückwärtige Ansicht eines Kraftfahrzeugs mit einer erfindungsgemäßen Anhängekupplung;
- Fig. 2: eine vergrößerte Darstellung einer erfindungsgemäßen Anhängekupplung mit einer Montageeinheit und einer Lagereinheit;
- Fig. 3: eine perspektivische Darstellung eines ersten Ausführungsbeispiels eines erfindungsgemäßen Kugelhalses mit einer Strebenstruktur als Tragstruktur;
- Fig. 4: eine Schnittdarstellung in Abwicklung längs Linie 4-4 in Fig. 3;
- Fig. 5: einen Vertikalschnitt längs Linie 5-5 in Fig. 4, allerdings nicht in Abwicklung;
- Fig. 6: eine perspektivische Darstellung eines zweiten Ausführungsbeispiels eines erfindungsgemäßen Kugelhalses in Explosionsdarstellung umfassend eine Strebenstruktur und eine Verkleidung;
- Fig. 7: eine Zusammenbauzeichnung des zweiten Ausführungsbeispiels;
- Fig. 8: einen Schnitt längs Linie 8-8 in Fig. 7;
- Fig. 9: eine Explosionsdarstellung eines dritten Ausführungsbeispiels eines erfindungsgemäßen Kugelhalses;
- Fig. 10: eine Zusammenbauzeichnung des dritten Ausführungsbeispiels des erfindungsgemäßen Kugelhalses;
- Fig. 11: einen Schnitt ähnlich Fig. 4 in Abwicklung durch das dritte Ausführungsbeispiel;
- Fig. 12: eine Explosionsdarstellung eines vierten Ausführungsbeispiels eines erfindungsgemäßen Kugelhalses;
- Fig. 13: einen Schnitt ähnlich Fig. 4 durch das zusammengebaute vierte Ausführungsbeispiel;
- Fig. 14: einen Schnitt längs Linie 14-14 in Fig. 13;
- Fig. 15: einen Schnitt ähnlich Fig. 14 durch ein fünftes Ausführungsbeispiel eines erfindungsgemäßen Kugelhalses;
- Fig. 16: einen Schnitt ähnlich Fig. 4 durch ein sechstes Ausführungsbeispiel eines erfindungsgemäßen Kugelhalses;
- Fig. 17: einen Schnitt ähnlich Fig. 4 durch ein siebtes Ausführungsbeispiel eines erfindungsgemäßen Kugelhalses;
- Fig. 18: einen Schnitt ähnlich Fig. 4 durch ein achtes Ausführungsbeispiel eines erfindungsgemäßen Kugelhalses;
- Fig. 19: einen Schnitt ähnlich Fig. 4 durch ein neuntes Ausführungsbeispiel eines erfindungsgemäßen Kugelhalses;
- Fig. 20: eine Explosionsdarstellung eines zehnten Ausführungsbeispiels eines erfindungsgemäßen Kugelhalses;
- Fig. 21: einen Schnitt längs Linie 21-21 durch das zusammengebaute zehnte Ausführungsbeispiel;
- Fig. 22: eine perspektivische Darstellung eines elften Ausführungsbeispiels eines erfindungsgemäßen Kugelhalses;
- Fig. 23: eine perspektivische Darstellung eines zwölften Ausführungsbeispiels eines erfindungsgemäßen Kugelhalses;
- Fig. 24: eine Explosionsdarstellung eines dreizehnten Ausführungsbeispiels eines erfindungsgemäßen Kugelhalses;
- Fig. 25: eine Zusammenbaudarstellung des dreizehnten Ausführungsbeispiels des erfindungsgemäßen Kugelhalses;
- Fig. 26: eine Explosionsdarstellung eines vierzehnten Ausführungsbeispiels eines erfindungsgemäßen Kugelhalses;
- Fig. 27: eine Zusammenbauzeichnung des vierzehnten Ausführungsbeispiels des erfindungsgemäßen Kugelhalses;
- Fig. 28: eine perspektivische Darstellung eines fünfzehnten Ausführungsbeispiels eines erfindungsgemäßen Kugelhalses;
- Fig. 29: eine perspektivische Darstellung eines sechzehnten Ausführungsbeispiels eines erfindungsgemäßen Kugelhalses und
- Fig. 30: einen Schnitt längs Linie 30-30 durch das sechzehnte Ausführungsbeispiel des erfindungsgemäßen Kugelhalses.

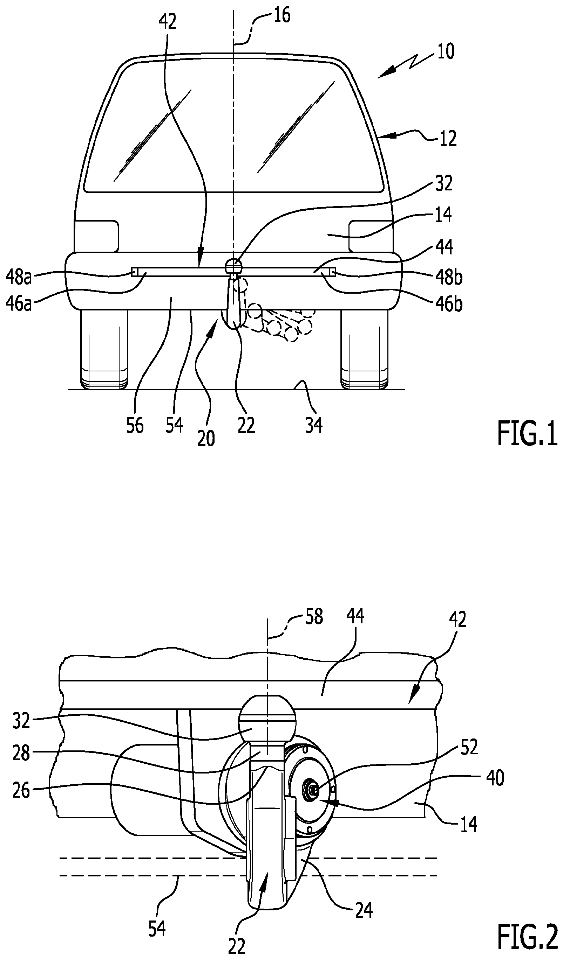

Ein in Fig. 1 dargestelltes und als Ganzes mit 10 bezeichnetes Kraftfahrzeug umfasst eine Karosserie 12, die an einem Heckbereich 14 eine Anhängekupplung 20 trägt, welche wie in Fig. 1 und 2 dargestellt, einen Kugelhals 22 aufweist, der sich von einem fahrzeugzugewandten ersten Endbereich 24 zu einem fahrzeugabgewandten zweiten Endbereich 26 trägt, wobei an dem zweiten Endbereich 26 ein Kugelansatz 28 angeordnet ist, auf welchem eine Kupplungskugel 32 sitzt, die somit über den Kugelansatz 28 mit dem zweiten Endbereich 26 des Kugelhalses 22 verbunden ist.

Der erste Endbereich 24 des Kugelhalses 22 ist über eine als Ganzes mit 40 bezeichnete Lagereinheit mit einer fahrzeugseitigen Montageeinheit 42 verbunden, über welche eine Verbindung mit dem Heckbereich 14 der Karosserie 12 erfolgt.

Beispielsweise umfasst die Montageeinheit 42 einen Querträger 44, der sich quer zu einer zu einer horizontalen Fahrbahn 34 vertikalen Längsmittelebene 16 der Karosserie 12 erstreckt und im Bereich seiner Trägerenden 46a, 46b mit dem Heckbereich 14 verbunden ist, beispielsweise über beiderseits der Längsmittelebene 16 und parallel zu dieser verlaufende Längsträger 48a, 48b die einerseits mit den Trägerenden 46a, 46b und andererseits mit der Karosserie 12, insbesondere dem Heckbereich 14 derselben, verbunden sind.

Beispielsweise ist die Lagereinheit 40 im einfachsten Fall so ausgebildet, dass sie eine starre Verbindung zwischen dem ersten Endbereich 24 des Kugelhalses 22 und der Montageeinheit 42 herstellt.

Im in Fig. 1 und 2 dargestellten Ausführungsbeispiel ermöglicht die Lagereinheit 40 ein Schwenken des Kugelhalses 22 um eine fahrzeugfest angeordnete, jedoch relativ zu der vertikalen Längsmittelebene 16 schräg, insbesondere in einem spitzen Winkel, verlaufende Schwenkachse 52, so dass wie in Fig. 1 dargestellt, der Kugelhals 22 unter einer Unterkante 54 einer heckseitigen Stoßfängereinheit 56 hindurch bewegbar ist und in einem Zwischenraum zwischen der Stoßfängereinheit 56 und dem Heckbereich 14 der Karosserie 12 in einer Ruhestellung positionierbar ist, während in der in Fig. 1 dargestellten Arbeitsstellung sich der Kugelhals 22 im Wesentlichen in parallel zur Längsmittelebene 16 erstreckt, zumindest jedoch so verläuft, dass in der Arbeitsstellung eine vertikale Mittelachse 56 der Kupplungskugel 32 gleichzeitig eine Mittelachse des Kugelansatzes 28 darstellt und diese Mittelachse 58 in der Längsmittelebene der Karosserie 12 liegt.

Derartige Lagereinheiten 40 mitsamt den dazugehörigen Verriegelungsvorrichtungen sind beispielsweise in den europäischen Patentanmeldungen EP 1 142 732 A, EP 1 741 572 A, EP 1 886 847 A, EP 2 141 034 A, EP 2 261 066 A, EP 2 567 837 A im Detail beschrieben, und auf diese Patentanmeldungen wird vollinhaltlich Bezug genommen.

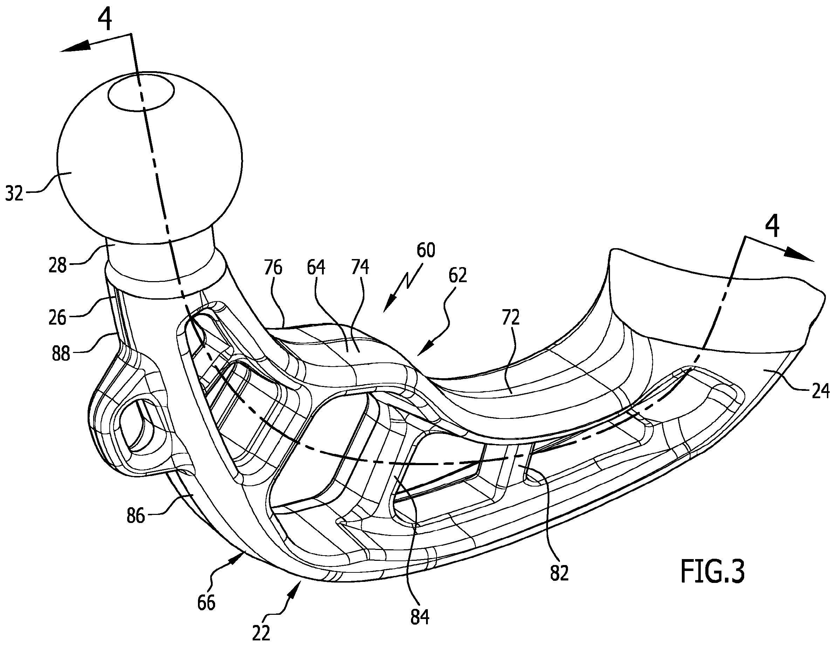

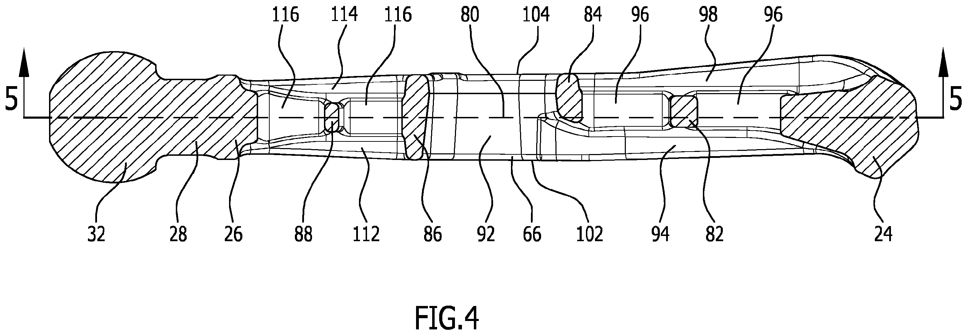

Wie in Fig. 3 und Fig. 4 dargestellt, umfasst der Kugelhals 22 eine vom ersten Endbereich 24 zum zweiten Endbereich 26 verlaufende Tragstruktur 60, die den ersten Endbereich 24 mit dem zweiten Endbereich 26 im Wesentlichen biege- und torsionssteif miteinander verbindet, wobei unter einer im Wesentlichen biege- und torsionssteifen Verbindung eine Verbindung zu verstehen ist, die bei in der Arbeitsstellung stehendem Kugelhals 22 bei den in der nachfolgenden Tabelle dargestellten Belastungen die folgenden Steifigkeitswerte aufweist.

Die Steifigkeit der Tragstruktur lässt sich beispielsweise bestimmen bei einer Belastung von 100 KN in der jeweiligen Raumrichtung sich die Kupplungskugel 32 relativ zum ersten Endbereich um maximal 5 mm bewegt.

Bei dem in Fig. 3 und 4 dargestellten Ausführungsbeispiel des Kugelhalses 22 ist die Tragstruktur 60 als Strebenstruktur 62 ausgebildet, welche bezogen auf die Arbeitsstellung des Kugelhalses 22 eine erste Längsstrebe 64 und eine zweite Längsstrebe 66 aufweist, wobei die erste Längsstrebe in der Arbeitsstellung auf einer der Fahrbahn 34 abgewandten Seite und die zweite Längsstrebe der Fahrbahn 34 zugewandt angeordnet ist.

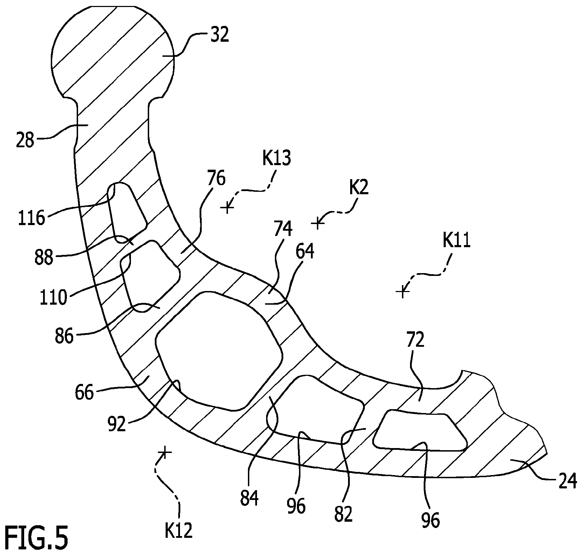

Dabei verläuft die erste Längsstrebe 64 vom insbesondere massiv ausgebildeten ersten Endbereich 24 zum insbesondere massiv ausgebildeten zweiten Endbereich 26 und die zweite Längsstrebe 66 ebenfalls vom ersten Endbereich 24 zum zweiten Endbereich 26, allerdings im Abstand von der ersten Längsstrebe 64 wobei die zweite Längsstrebe 66 in der Arbeitsstellung des Kugelhalses 22 beispielsweise eine Krümmung aufweist, bei welcher ein Krümmungsmittelpunkt K2 oder gegebenenfalls mehrere Krümmungsmittelpunkte auf einer der Fahrbahn 34 abgewandten Seite liegen (Fig. 5).

Auch die erste Längsstrebe 64 verläuft bei diesem, in Fig. 3 dargestellten Ausführungsbeispiel mit einem ersten Teilbereich 72 ausgehend vom ersten Endbereich 24 mit insgesamt drei aufeinanderfolgenden Teilbereichen 72, 74, 76 bis zum zweiten Endbereich 26, wobei die Teilbereiche 72 und 76 Krümmungen aufweisen, deren Krümmungsmittelpunkte K11 und K13 auf einer der Fahrbahn 34 abgewandten Seite derselben liegen, während der Teilbereich 74 eine Krümmung aufweist, dessen Krümmungsmittelpunkt K12 oder Krümmungsmittelpunkte auf einer der Fahrbahn 34 zugewandten Seite des Teilbereichs 74 liegen (Fig. 5).

Ferner verlaufen, wie insbesondere in Fig. 4 im Zusammenhang mit der zweiten Längsstrebe 66 dargestellt, beide Längsstreben 64, 66 in einer Mittelfläche 80 und erstrecken sich quer zur Mittelfläche 80 in allen Bereichen beiderseits über diese hinaus, so dass beide Längsstreben 64, 66 quer zur Mittelfläche 80 eine Breitenausdehnung von mindestens 15 mm, noch besser mindestens 20 mm aufweisen.

Ferner weisen die Längsstreben 64, 66 in der Mittelfläche 80 eine quer zu ihrer Verlaufsrichtung verlaufende Höhenausdehnung von mindestens 5 mm auf.

Bei dem in Fig. 1 bis 5 dargestellten ersten Ausführungsbeispiel verlaufen die Längsstreben 64 und 66 im Bereich zwischen dem ersten Endbereich 24 und dem zweiten Endbereich 26 berührungsfrei zueinander, sind allerdings durch in Fig. 3 dargestellte Verbindungsstreben 82, 84, 86, 88 miteinander verbunden, wobei die Verbindungsstreben 82, 84, 86, 88, wie in Fig. 4 dargestellt, sich beispielsweise ebenfalls quer zur Mittelfläche 80 ausdehnen und jeweils die Längsstreben 64 und 66 miteinander starr verbinden.

Die Verbindungsstreben 82, 84, 86, 88 sind vorzugsweise alle so angeordnet, dass die Mittelfläche 80 diese schneidet und verlaufen außerdem in Richtung vom ersten Endbereich 24 zum zweiten Endbereich 26 im Abstand voneinander.

Durch die Strebenstruktur 62 der Tragstruktur 60 entstehen somit mehrere, insbesondere zwischen den Längsstreben 64 und 66, angeordnete Freiräume. So ist beispielsweise ein erster Freiraum 92 so ausgebildet, dass er einen die gesamte Strebenstruktur 62, ausgehend von einer seitlichen Außenkontur 102 des Kugelhalses zur gegenüberliegenden seitlichen Außenkontur 104 durchsetzt und somit einen Durchlass in der Strebenstruktur 62 darstellt.

Ein weiterer Freiraum 94 ist beispielsweise als relativ zu der seitlichen Außenkontur 102 des Kugelhalses 22 zurückgesetzte Tasche ausgebildet und geht in zwei jeweils als Durchlässe ausgebildete Freiräume 96 über, die wiederum in einen als relativ zu der seitlichen Außenkontur 104 des Kugelhalses zurückgesetzte Tasche ausgebildeten Freiraum 98 münden.

Vorzugsweise liegt der als Durchlass ausgebildete Freiraum 92 zwischen den Verbindungsstreben 84 und 86 und die als Durchlässe ausgebildeten Freiräume 96 liegen zwischen dem ersten Endbereich 24 und der Verbindungsstrebe 82 sowie der Verbindungsstrebe 82 und der Verbindungsstrebe 84 und außerdem liegen die als Taschen ausgebildeten Freiräume 94 und 98 zwischen dem ersten Endbereich 24 und der Verbindungsstrebe 84.

Des Weiteren sind auch zwischen der Verbindungsstrebe 86 und dem zweiten Endbereich 26 als einander gegenüberliegende Taschen ausgebildete Freiräume 112 und 114 vorgesehen, wobei der Freiraum 112 relativ zu der seitlichen Außenkontur 102 des Kugelhalses 22 und der Freiraum 114 relativ zu der seitlichen Außenkontur 104 zurückgesetzt ist und zwischen diesen Freiräumen 112 und 114 liegen wiederum als Durchlässe ausgebildete Freiräume 116, wobei der eine als Durchlass ausgebildete Freiraum 116 zwischen der Verbindungsstrebe 86 und der Verbindungsstrebe 88 und der andere als Durchlass ausgebildete Freiraum 116 zwischen der Verbindungsstrebe 88 und dem zweiten Endbereich 26 liegt.

Die erfindungsgemäße Strebenstruktur 62 mit den Freiräumen 92 bis 98 sowie 112 bis 116 hat den Vorteil, dass sich damit die Masse des Kugelhalses 22 bei gleicher Steifigkeit signifikant gegenüber massiven Kugelhälsen, selbst wenn diese einen Durchbruch aufweisen, reduzieren lässt.

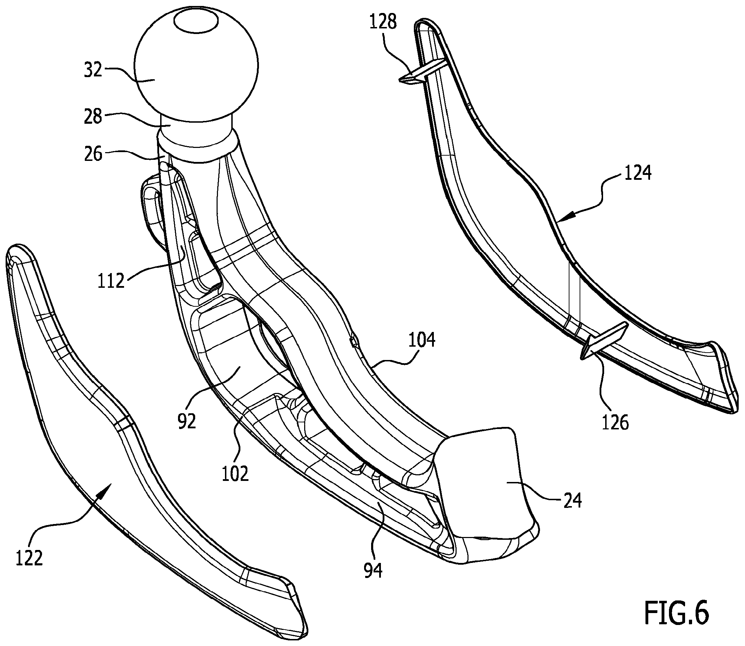

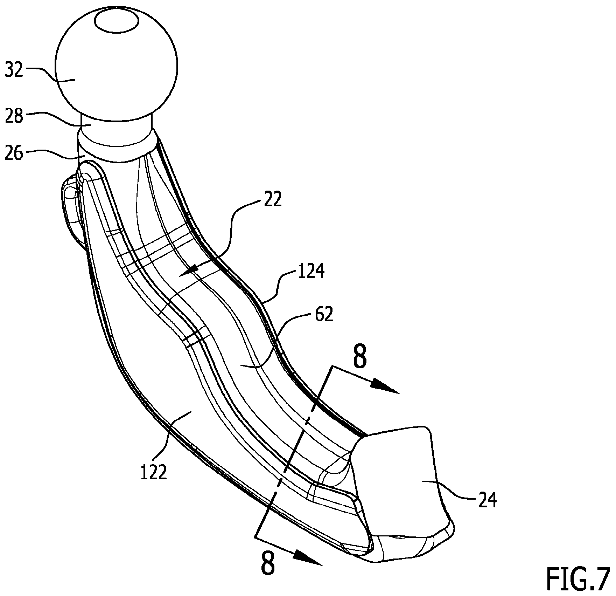

Um beim Einsatz eines derartigen Kugelhalses 22 die Freiräume 92 bis 98 sowie 112 bis 116 nicht sichtbar werden zu lassen, ist bei einem zweiten Ausführungsbeispiel eine für die Strebenstruktur 62 nicht tragende Verkleidung 120 vorgesehen, die beispielsweise, wie in Fig. 6 dargestellt, struktursteife Abdeckungen 122, 124 umfasst, welche den Kugelhals im Bereich seiner seitlichen Außenkonturen 102 und 104 verschließen, wobei die Abdeckungen 122, 124 beispielsweise sämtliche der über die Außenkonturen 102 und 104 sichtbaren und zugänglichen Freiräume 92, 94, 96, 98, 112, 114, 116 überdecken und, wie in Fig. 7 dargestellt, dem in Form der Strebenstruktur 62 hergestellten Kugelhals durch Überdecken der Freiräume 92 bis 98 sowie 112 bis 116 ein gefälliges äußeres Erscheinungsbild verleihen, so dass die Strebenstruktur 62 als solche nicht erkennbar ist und der Kugelhals 22 mit der Strebenstruktur 62 ein kompaktes Aussehen besitzt.

Die Abdeckungen 122, 124 lassen sich vorzugsweise als Kunststoffformteile, insbesondere als nicht tragende Kunststoffformteile, in einfacher Weise mit dem gewünschten entsprechenden optischen Erscheinungsbild herstellen, so dass dadurch beispielsweise die Möglichkeit besteht, die Strebenstruktur 62 insbesondere im Bereich der Freiräume 92 bis 98 sowie 112 bis 116 im durch das Herstellverfahren, beispielsweise das Umformen, entstandenen Rohzustand und unbearbeitet zu belassen, da diese durch die Abdeckungen 122 und 124 nicht sichtbar sind.

Darüber hinaus lassen sich vorzugsweise die Abdeckungen 122 und 124, wie in Fig. 6 dargestellt, durch jeweils an den Abdeckungen 122 und 124 angeordnete Rastelemente 126 und 128 miteinander verbinden, wobei die Rastelemente 126 und 128 jeder der Abdeckungen 122 und 124 jeweils zusammenwirken und einander hintergreifen, so dass die Abdeckungen 122 und 124 die Strebenstruktur 62 zwischen sich einschließen.

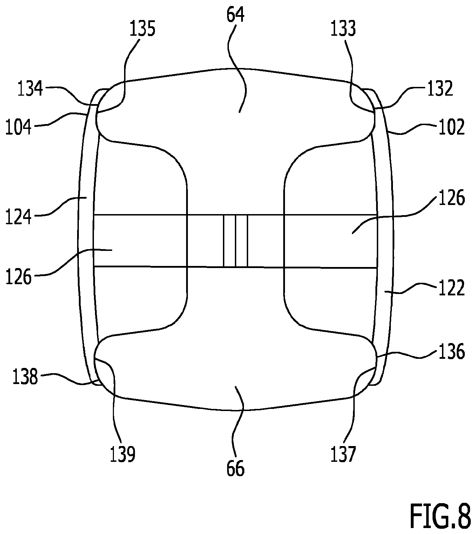

Ferner sind die Abdeckungen 122 und 124, wie in Fig. 8 dargestellt, so ausgebildet, dass sie die Außenkonturen 102 und 104 bildende Randbereichen 132 und 134 der ersten Längsstrebe 64 sowie Randbereiche 136 und 138 der zweiten Längsstrebe 66 übergreifen, wobei diese Randbereiche 132, 134, 136, 138 vorzugsweise auf jeder Seite geschlossen umlaufende Anlage Konturen für die Abdeckungen 122, 124 darstellen, an denen diese mit an diese angepassten Anlagestrukturen 133, 135, 137, 138 anliegt und insbesondere abschließend sowie formschlüssig an diesen anliegen, so dass dadurch eine eindeutige Positionierung der Abdeckungen 122, 124 relativ zu der Strebenstruktur 62 erfolgt.

Im Übrigen sind bei dem zweiten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

Die Tatsache, dass der Kugelhals 22 eine Tragstruktur 60 in Form der Strebenstruktur 62 aufweist und zusätzlich die Freiräume 92, 94, 96, 98, 112, 114, 116 der Tragstruktur 60 durch Abdeckungen 122, 124 abgedeckt sind, lässt sich bei einem dritten Ausführungsbeispiel weiter zum Einbau von zusätzlichen Einheiten ausnutzen.

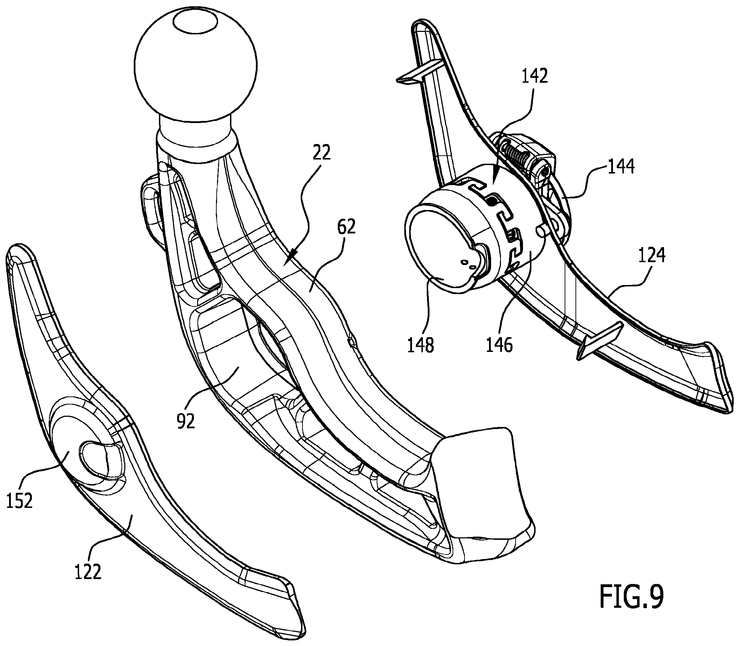

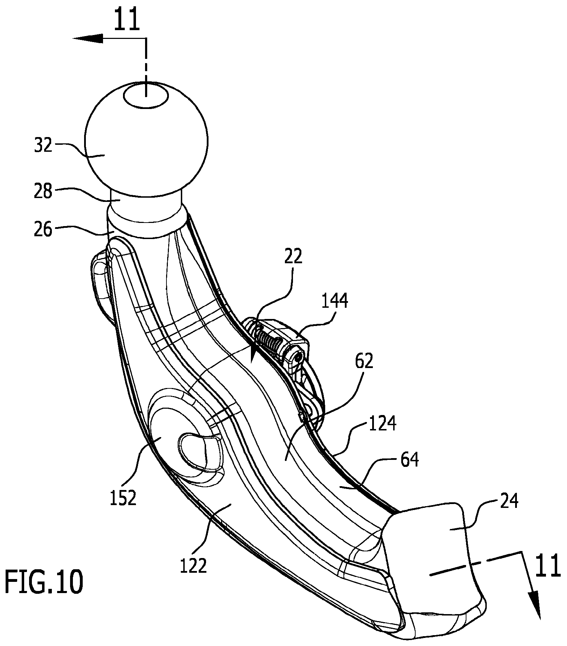

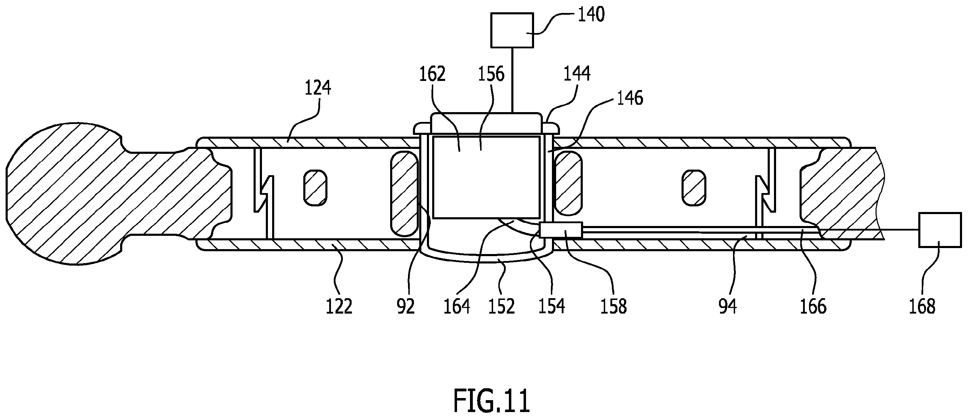

So ist, wie in Fig. 9 und 10 dargestellt, bei dem dritten Ausführungsbeispiel beispielsweise eine als Ganzes mit 142 bezeichnete elektrische Kontakteinheit zur Herstellung einer elektrischen Verbindung mit einem elektrischen Anhängernetz 140 beispielsweise an der Abdeckung 124 gehalten, wobei ein mit einem Deckel 144 verschließbarer Zugangsbereich der Kontakteinheit 142 im Bereich der Abdeckung 124 liegt und sich ein Kontaktgehäuse 146 ausgehend von der Abdeckung 124 in Richtung der Strebenstruktur 62 erstreckt und vorzugsweise so angeordnet ist, dass dieses sich durch den als Durchlass ausgebildeten Freiraum 92 erstreckt, wobei eine dem Deckel 144 abgewandte Rückseitenöffnung 148 des Kontaktgehäuses 146 durch eine in die Abdeckung 122 eingeformte Deckeleinheit 152 verschließbar ist, und wobei die Deckeleinheit 152 mit dem Kontaktgehäuse 146 durch Verbindungselemente 154, beispielsweise durch Fügen- oder Rastelemente, verbindbar ist, um einen Innenraum 156 des Kontaktgehäuses 146 im Bereich der Rückseitenöffnung 148 zuverlässig zu verschließen, wie in Fig. 11 dargestellt.

Vorzugsweise liegt bei diesem Ausführungsbeispiel in dem Freiraum 94 eine Steckverbindung 158, welche eine elektrische Verbindung zwischen einer von einem Kontakteinsatz 162 im Innenraum 156 des Kontaktgehäuses 146 kommenden Leitung 164 und einer von einem elektrischen Fahrzeugnetz 168 kommenden Leitung 166 ermöglicht, wie in Fig. 11 dargestellt.

Insbesondere sind die Steckverbindungen 158 und die Leitung 166, insoweit als sie in dem Freiraum 94 verläuft an der Abdeckung 122 gehalten.

Im Übrigen sind bei dem dritten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

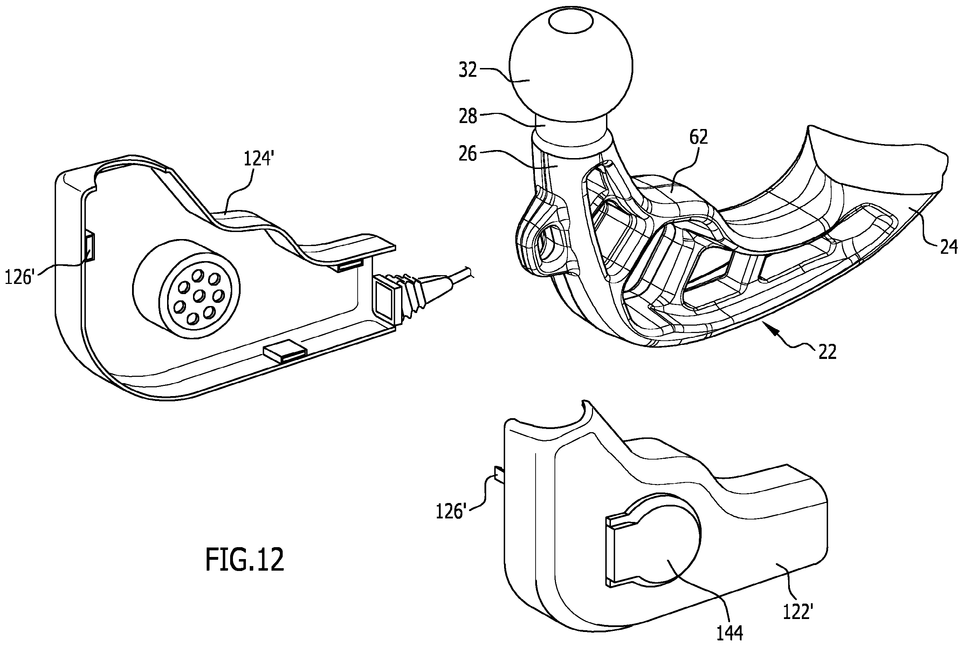

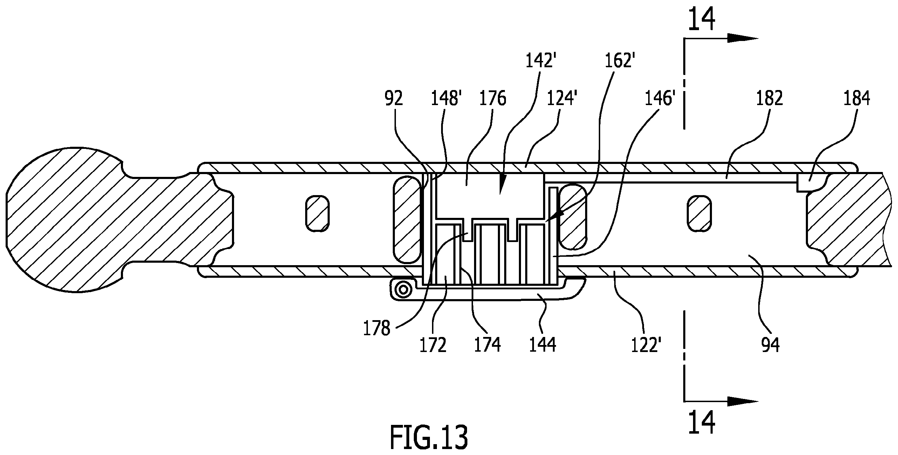

Bei einem vierten Ausführungsbeispiel, dargestellt in den Fig. 12, 13 und 14 sind die Abdeckungen 122' und 124' nicht nur so ausgebildet, dass sie die seitlichen Außenkonturen 102 und 104 der Strebenstruktur 62 überdecken und somit die Freiräume 92, 94, 96, 98, 112, 114, 116 verschließen, sondern so ausgebildet, dass sie auch die Längsstreben 64 und 66 umschließen, so dass die Strebenstruktur 62 als Ganzes durch die Abdeckungen 122' und 124' eingekapselt ist.

Vorzugsweise erfolgt dabei eine Verbindung der Abdeckungen 122' und 124' durch ineinandergreifende Rastelemente 126', die beispielsweise an den Längsstreben 64 und 66 jeweils auf einer fahrbahnabgewandten und auf einer fahrbahnzugewandten Seite anliegen.

Ferner ist bei diesem Ausführungsbeispiel vorzugsweise die Kontakteinheit 142' so aufgebaut, dass der Deckel 144 an der Abdeckung 122' gehalten ist und auch das Kontaktgehäuse 146' sich ausgehend von der Abdeckung 122' durch den Freiraum 92 der Strebenstruktur 62 in Richtung der Abdeckung 124' erstreckt, wobei der Kontakteinsatz 162' zweigeteilt ist, nämlich in einen Kontakthülsenträger 172 mit in diesem angeordneten Kontakthülsen 174, wobei die Kontakthülsen 174 zur Aufnahme externer Steckkontakte vorgesehen sind. Dabei ist der Kontakthülsenträger 172 fest in dem Kontaktgehäuse 146' fixiert und somit auch fest mit der Abdeckung 122' verbunden.

Zur Kontaktierung der Kontakthülsen 174 in dem Kontakthülsenträger 172 ist ein Kontaktiersockel 176 vorgesehen, welcher fest mit der Abdeckung 124' verbunden ist, von der Rückseitenöffnung 148' des Kontaktgehäuses 146' in dieses eingreift und seinerseits mit Kontaktstiften 178 die Kontakthülsen 174 im Kontakthülsenträger 172 kontaktiert.

Diese Lösung eröffnet die Möglichkeit, die Kontaktstifte 178 mit einer fest an der Abdeckung 124 angeordneten und im Bereich des Freiraums 98 verlaufenden Zuleitung 182 zu verbinden, welche an der Abdeckung 124' gehalten ist und beispielsweise zu dem ebenfalls im Bereich des Freiraums 98 angeordneten Kontaktverbinderelement 184 führt, das beispielsweise ebenfalls fest mit der Abdeckung 124' verbunden ist, so dass dieses Kontaktverbinderelement 184 durch eine Steckverbindung mit einer vom elektrischen Fahrzeugnetz 168 kommenden Zuleitung elektrisch verbindbar ist.

Somit lassen sich der Kontaktiersockel 176, die Zuleitung 182 und auch das Steckverbinderelement 184 mit der Abdeckung 124' verbinden, vorzugsweise bei der Herstellung derselben fixieren oder integrieren, so dass ein Zusammensetzen der Abdeckungen 122' und 124' dazu führt, dass einerseits das Kontaktgehäuse 146' durch den in dieses eingreifenden Kontaktiersockel 176 im Bereich seiner Rückseitenöffnung 148' verschlossen wird und andererseits eine Kontaktierung der Kontakthülsen 174 im Kontakthülsenträger 172 sowie deren Verbindung mit dem Kontaktverbinderelement 184 für den Anschluss einer externen Steckverbindung erfolgt.

Damit führt die Montage der Abdeckungen 122' und 124' an der Strebenstruktur 62 nicht nur zur Montage derselben sondern auch gleichzeitig zu einer Komplettmontage der Kontakteinheit 142'.

Im Übrigen sind bei dem vierten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

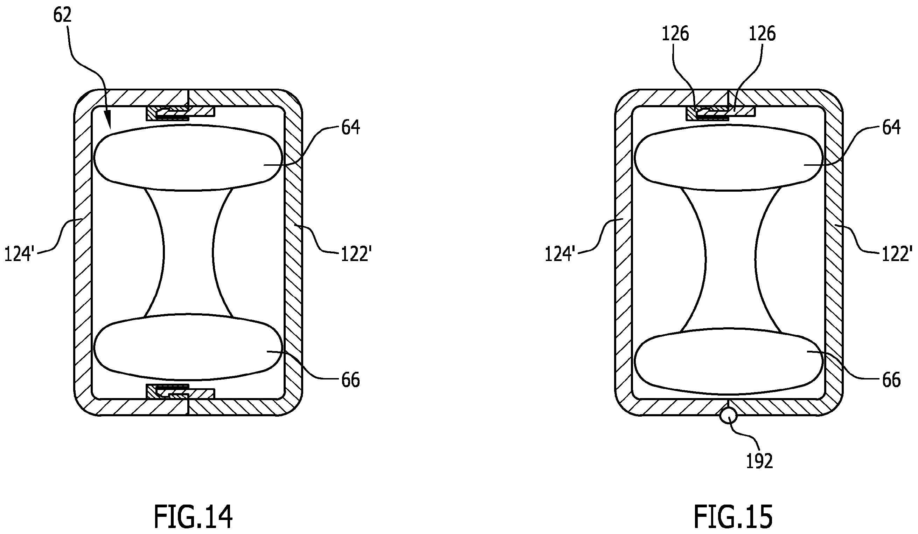

Alternativ zum Vorsehen zweier getrennter Abdeckungen 122' und 124', die sich durch die Rastelemente 126 verbinden lassen, sieht ein fünftes Ausführungsbeispiel, dargestellt in Fig. 15 vor, dass die zwei Abdeckungen 122' und 124' mit einem Scharnierelement 192, beispielsweise mit einem Filmscharnier, einseitig miteinander verbunden sind, so dass lediglich auf einer der Scharniereinheit 192 gegenüberliegenden Seite Rastelemente 126 zum Verbinden der beiden Abdeckungen 122' und 124' vorgesehen sind.

Im Übrigen sind bei dem fünften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

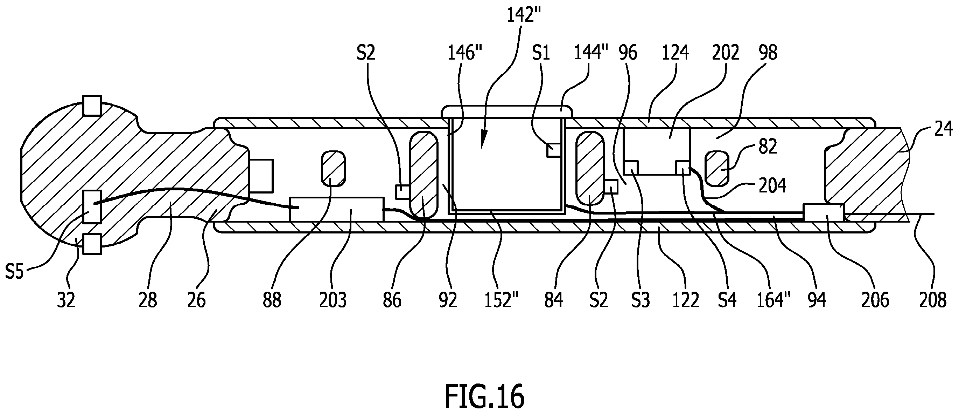

Bei einem sechsten Ausführungsbeispiel, dargestellt in Fig. 16 sind diejenigen Elemente, die mit denen der voranstehenden Ausführungsbeispiele identisch sind, mit denselben Bezugszeichen versehen, so dass hinsichtlich der Beschreibung derselben vollinhaltlich auf diese Bezug genommen werden kann.

Im Gegensatz zu den voranstehenden Ausführungsbeispielen ist die Kontakteinheit 142" mit einem Kontaktgehäuse 146" versehen, welches auf einer dem Deckel 144" gegenüberliegenden Seite topfähnlich ausgebildet und somit bereits durch eine an das Kontaktgehäuse 146 angeformte Deckeleinheit 152" unmittelbar verschlossen ist, so dass die Abdeckung 122 als durchgehende Abdeckung ausgebildet sein kann und keine Anpassung der Konzeption der Abdeckung 122 an die Kontakteinheit 142 erforderlich ist.

Ferner ist beispielsweise an der Abdeckung 124 noch eine Funktionseinheit 202 vorgesehen, die sich in den Freiraum 98 und den Freiraum 96 hineinerstreckt.

Die Funktionseinheit 202 kann unterschiedlichste Funktionen erfüllen.

Beispielsweise ist es vorgesehen, dass die Funktionseinheit 202 als Betriebszustandserfassungseinheit ausgebildet ist und Sensoreinheiten und/oder Auswerteschaltungen für die in der Funktionseinheit 202 angeordnete Sensoreinheiten oder externe Sensoreinheiten, beispielsweise an der Strebenstruktur 62 und/oder in der Kupplungskugel 32 und/oder in der Kontakteinheit 142" angeordnete Sensoreinheiten, aufweist.

Derartige Sensoreinheiten umfassen beispielsweise Positionssensoren S1 zum Erfassen eines in die Kontakteinheit 142" eingesteckten Steckverbinders zur Versorgung eines elektrischen Netzes einer vom Kugelhals 22 gehaltenen Einheit und/oder Schwingungssensoren S2 zum Erfassen von mechanischen Schwingungen in der Strebenstruktur, wobei einer oder mehrere Schwingungssensoren S2 an einer der Verbindungsstreben 84, 86 angeordnet sind und/oder Beschleunigungssensoren und/oder Lagesensoren S4, die beispielsweise in der Funktionseinheit 202 selbst angeordnet sind, und/oder in der Kupplungskugel 32 angeordnete Drehlagesensoren S5 zur Erfassung eines Knickwinkels zwischen einen an der Kupplungskugel 32 mit einer Zugkugelkupplung angreifenden Anhänger, wobei dem Drehlagensensor S5 beispielsweise noch eine eigene zusätzliche Auswerteschaltung 203 zugeordnet ist etc.

Sowohl die von der Kontakteinheit 142" wegführende elektrische Leitung 164" als auch eine von der Funktionseinheit 202 wegführende elektrische Leitung 204 lassen sich unter Ausnützung der vorhandenen Freiräume, beispielsweise der Freiräume 96 und 94, zwischen den Abdeckungen 122 und 124 verlegen und gegebenenfalls unter Zwischenschaltung einer Steckverbindung 206 mit einer zum Kraftfahrzeug geführten Leitung 208 verbinden.

Im Übrigen sind bei dem sechsten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

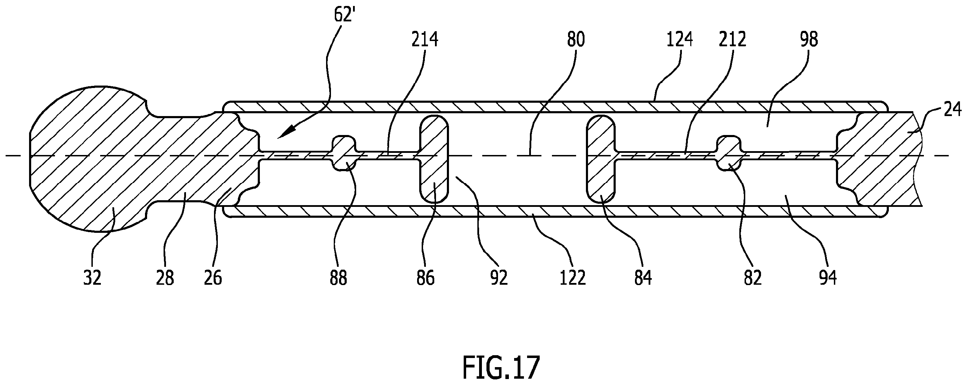

Bei einem siebten Ausführungsbeispiel, dargestellt in Fig. 17 ist die Strebenstruktur 72' insoweit gegenüber der Strebenstruktur 62 modifiziert, als die Verbindungsstreben 82, 84, 86, 88 noch zusätzlich ergänzt sind durch zwischen den Längsstreben 64, 66 verlaufende und diese verbindende Verbindungswände 212, 214, die näherungsweise parallel zur Mittelfläche 80 verlaufen, wobei die Verbindungswände 212, 214 dabei mit der Mittelfläche 80 einen Winkel von maximal 30°, noch besser maximal 20° und vorzugsweise maximal 10° einschließen.

Die Verbindungswände 212, 214 könnten selbständig unabhängig von den Verbindungsstreben 82, 84, 86, 88 angeordnete Verbindungselemente sein.

Besonders vorteilhaft ist es jedoch, wenn die Verbindungswände 212, 214 mit den Verbindungsstreben 82, 84, 86, 88 verbunden sind, insbesondere in diese übergehen und somit zusammen mit den Verbindungsstreben 82, 84, 86, 88 in vorteilhafter Weise die Steifigkeit der Strebenstruktur 62 verbessern.

Eine besonders vorteilhafte Lösung sieht dabei vor, dass die Verbindungswände 212, 214 näherungsweise in der Mittelfläche 80 liegend verlaufen und die Verbindungswand 212 einstückig mit dem ersten Endbereich 24, den Streben 82 und 84 den ersten und zweiten Längsstreben 64, 66 sowie die Verbindungswand 214 mit dem zweiten Endbereich 26 sowie den Verbindungsstreben 88 und 86 einstückig verbunden sind und somit die gesamte Strebenstruktur 62' vorzugsweise ein einziges einstückiges Teil darstellt.

Bei diesem Fall ist somit nur noch der Freiraum 92 als die Strebenstruktur 62' insgesamt durchsetzender Durchlass ausgebildet, während die Verbindungswände 212 und 214 die als Durchlässe ausgebildeten Freiräume 96 und 116 verschließen, so dass lediglich beiderseits der Verbindungswände 212 und 214 die als Taschen ausgebildeten Freiräume 94, 98 vorhanden sind.

Auch bei dem siebten Ausführungsbeispiel besteht die einfachste Möglichkeit, wie in Fig. 17 dargestellt, darin, die Freiräume durch Abdeckungen 122, 124 zu verschließen.

Im Übrigen sind bei dem siebten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

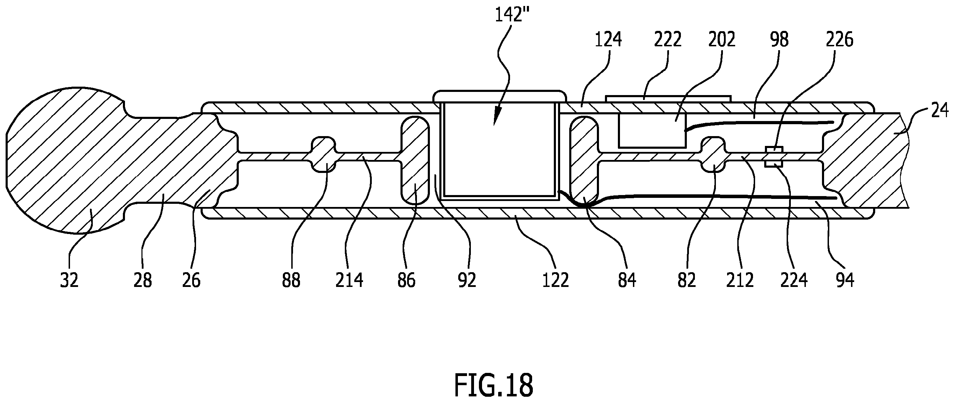

Ferner besteht, wie in Fig. 18 dargestellt, bei einem achten Ausführungsbeispiel die Möglichkeit, den Freiraum 92 durch Einsetzen der Kontakteinheit 142" zu nutzen und beispielsweise in den Freiraum 98 die Funktionseinheit 202 einzusetzen, die sich allerdings lediglich im Bereich des Freiraums 98 erstreckt.

Bei diesem Ausführungsbeispiel ist die als Betriebszustandserfassungseinheit ausgebildete Funktionseinheit 202 beispielsweise mit einer ebenfalls eine Funktionseinheit darstellenden Anzeigeeinheit 222 verbunden, die vorzugsweise an der Abdeckung 124 angeordnet ist, an welcher auch die Funktionseinheit 202 angeordnet ist, so dass in diesem Fall die Abdeckung 124 zusätzlich zur Funktionseinheit 202 auch die Anzeigeeinheit 222 trägt, die die Möglichkeit eröffnet, Betriebszustände der Anhängekupplung oder des Anhängers oder Belastungszustände der Anhängekupplung, insbesondere Belastungszustände des Kugelhalses 22, die beispielsweise über an der Strebenstruktur 62', insbesondere den Verbindungswänden 212, 214, angeordnete Dehnungssensoren S6, S6 gemessen werden, anzuzeigen.

Im Übrigen sind bei dem achten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

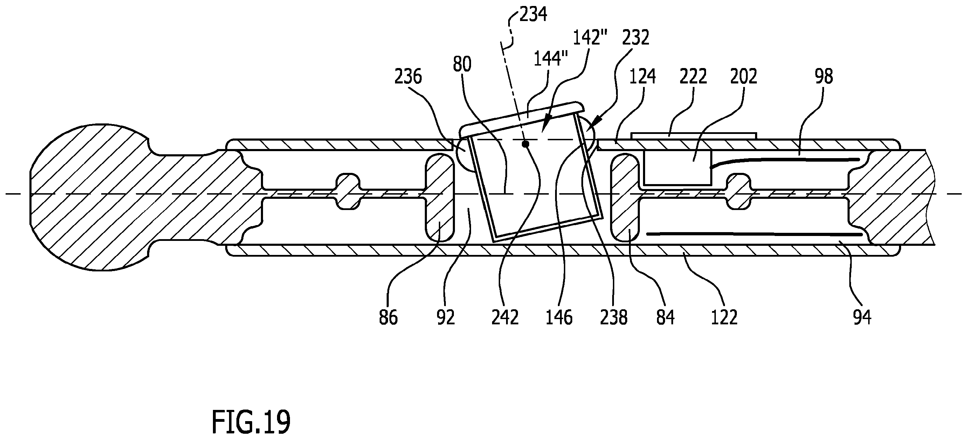

Bei einem neunten Ausführungsbeispiel, dargestellt in Fig. 19 ist die Kontakteinheit 142" mittels einer Schwenkeinheit 232 an der Abdeckung 124 gelagert, so dass sich die Kontakteinheit 142' mit ihrer Mittelachse 234 so verschwenken lässt, dass die Mittelachse 234 in einem von 90° abweichenden Winkel zur Mittelfläche 80 verläuft, um die Zugänglichkeit zu der Kontakteinheit 142" für einen Benutzer in der Arbeitsstellung zu verbessern.

Beispielsweise umfasst die Schwenkeinheit 232 einen mit seiner Außenkontur ballig ausgebildeten Aufnahmering 236, welcher das Kontaktgehäuse 146 umschließt und seinerseits mit seiner balligen Außenfläche in einer an der Abdeckung 124 ausgebildeten Schwenkaufnahme 238 sitzt, so dass der Aufnahmering 236 um einen Punkt 242 schwenkbar ist, welcher ein Kugelmittelpunkt einer die ballige Außenkontur des Aufnahmerings 236 definierenden Kugelfläche ist, so dass dadurch begrenzt durch den Freiraum 92 und die beiderseits des Freiraums 92 angeordneten Verbindungsstreben 84 und 86 die Kontakteinheit 142" schwenkbar ist, um die Zugänglichkeit zu der Kontakteinheit 142" zu verbessern.

Im Übrigen sind bei dem neunten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

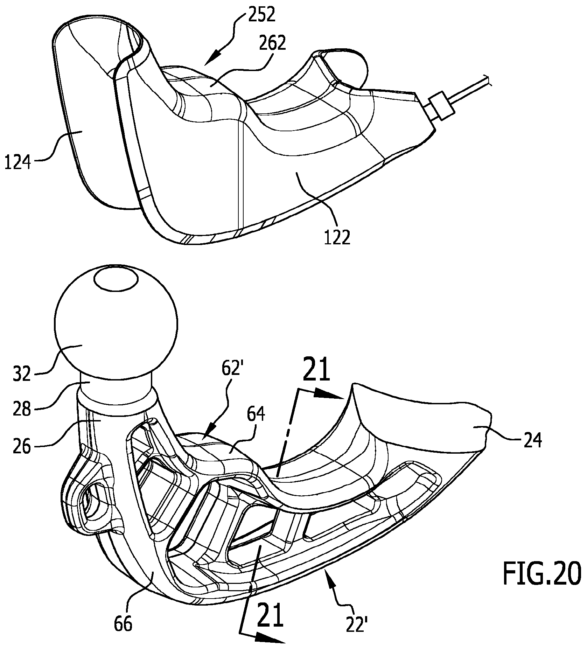

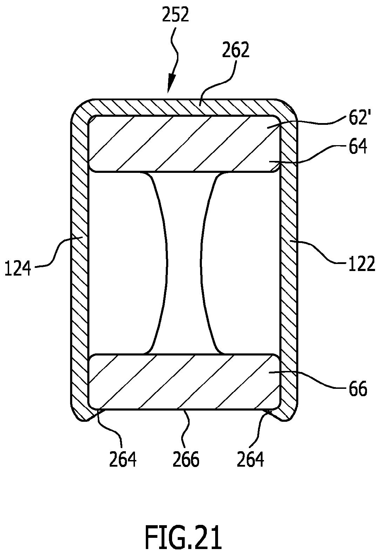

Bei einem zehnten Ausführungsbeispiel, dargestellt in Fig. 20, ist zur Abdeckung der Strebenstruktur 62' des Kugelhalses 22' eine Abdeckeinheit 252 vorgesehen, bei welcher die seitlichen Abdeckungen 122 und 124 durch ein die Längsstrebe 64 übergreifendes und die Abdeckungen 122 und 124 miteinander verbindendes Mittelelement 262 miteinander verbunden sind, welches vorzugsweise die Längsstrebe 64 über ihre ganze Erstreckung zwischen dem ersten Endbereich 24 und dem zweiten Endbereich 26 überdeckt und welches vorzugsweise einstückig mit den Abdeckungen 122, 124 verbunden ist, so dass, wie in Fig. 21 dargestellt, die als Ganzes mit 252 bezeichnete Abdeckeinheit die Strebenstruktur 62' U-förmig im Bereich der ersten Längsstrebe 64 übergreift und seitlich mittels der Abdeckungen 122 und 124 umgreift, wobei die Abdeckungen 122 und 124 vorzugsweise endseitig mit Rastnasen 264 verbunden sind, die die Längsstrebe 66 in der Arbeitsstellung auf ihrer der Fahrbahn 34 zugewandten Unterseite 266 hintergreift und dadurch die Abdeckeinheit 252 an der Strebenstruktur 62' fixiert hält.

Eine derartige Abdeckeinheit 252 lässt sich im einfachsten Fall nur zum Abdecken der Strebenstruktur 62' einsetzen.

Im Übrigen sind bei dem zehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

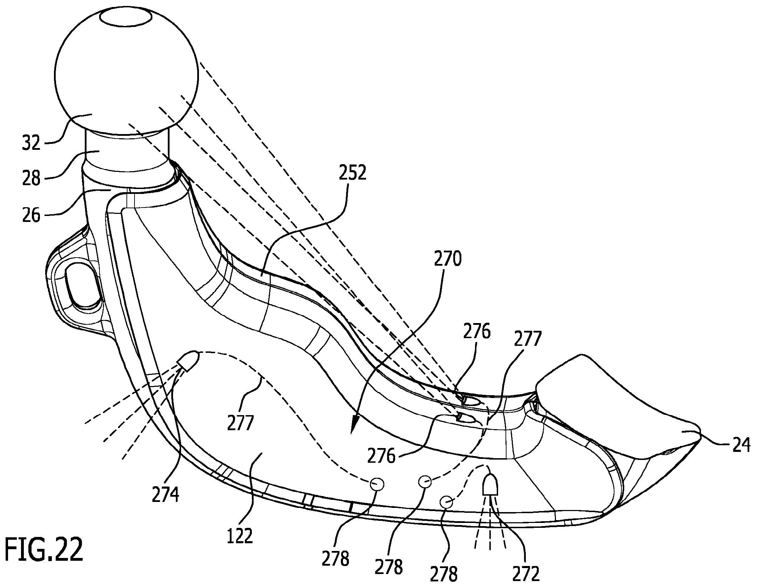

Bei einem elften Ausführungsbeispiel, dargestellt in Fig. 22 ist jedoch die Abdeckeinheit 252 mit einer eine Funktionseinheit darstellenden Beleuchtungseinheit 270 versehen, welche mehrere an der Abdeckeinheit 252 vorgesehene Lichtaustrittselementen 272, 274 und 276 aufweist.

Beispielsweise dienen die Lichtaustrittselemente 272 dazu, eine Fahrbahn 34 zu beleuchten.

Ferner können beispielsweise die Lichtaustrittselemente 274 dazu dienen, einen Teil der hinter dem Kraftfahrzeug 10 liegenden Fahrbahn 34 oder eine anzuhängenden Einheit zu beleuchten.

Ferner können beispielsweise die Lichtaustrittselemente 276 dazu dienen, die Kupplungskugel 32 anzuleuchten, was insbesondere bei einem Anhängen eines Anhängers eine große Erleichterung darstellt.

Die Lichtaustrittselemente 272, 274 und 276 können ihrerseits unmittelbar durch Leuchtdioden oder Leuchtdiodenarrays gebildet werden.

Vorteilhafterweise ist vorgesehen, die Lichtaustrittselemente 272, 274, 276 durch Endflächen polymerer Lichtleiter 277 zu bilden, in die, beispielsweise innerhalb von Freiräumen 94, 96, 98 der Strebenstruktur 62 mittels Lichtquellen 278, beispielsweise Leuchtdioden, Licht eingekoppelt wird, das dann an den Endflächen im Bereich der Lichtaustrittselemente 272, 274, 276 wieder austritt.

Im Übrigen sind bei dem elften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

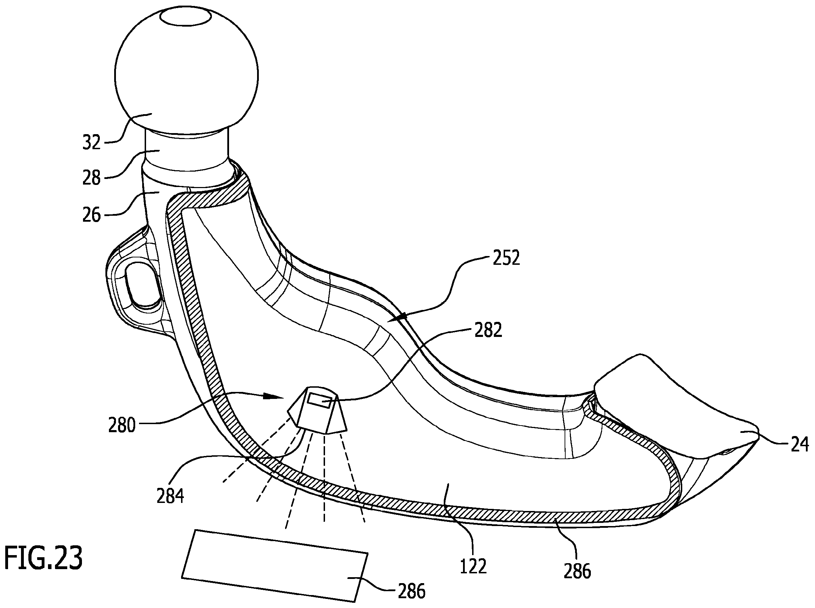

Alternativ zum elften Ausführungsbeispiel ist bei einem zwölften Ausführungsbeispiel, dargestellt in Fig. 23, die Abdeckeinheit 252 im Bereich der seitlichen Abdeckung 122 und der gegenüberliegenden Abdeckung 124 jeweils eine eine Funktionseinheit darstellende Projektionseinheit 280, mit einer Bilderzeugungseinheit 282, beispielsweise einem Display, und einem das erzeugte Bild projizierende Projektionselement 284 vorgesehen, aus welchem Licht austritt und eine Projektionsfläche 286, beispielsweise auf der Fahrbahn 34, ausleuchtet, welche Informationen, beispielsweise Informationen über die Belastung des Kugelhalses 22 oder über eine elektrische Verbindung zwischen dem Kraftfahrzeug 10 und einer an diesem angehängten Einheit für den Benutzer zur Verfügung stellt.

Darüber hinaus ist bei dem zwölften Ausführungsbeispiel noch eine Randkontur 286 der Abdeckeinheit 252 durch eine eine Funktionseinheit darstellende Beleuchtungseinheit 270' welche als Lichtaustrittselement eine eine Randkontur 288 des Kugelhalses 22 in Umrissen anzeigende Konturbeleuchtung 272' umfasst, welche den Vorteil bietet, dass dadurch für jedermann sichtbar ist, dass das Kraftfahrzeug mit einem in Arbeitsstellung stehenden Kugelhals 22 versehen ist, so dass beispielsweise Unfälle mit nicht sichtbarem Kugelhals 22 der Anhängekupplung, insbesondere in der Dunkelheit vermieden werden können.

Im Übrigen sind bei dem zwölften Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

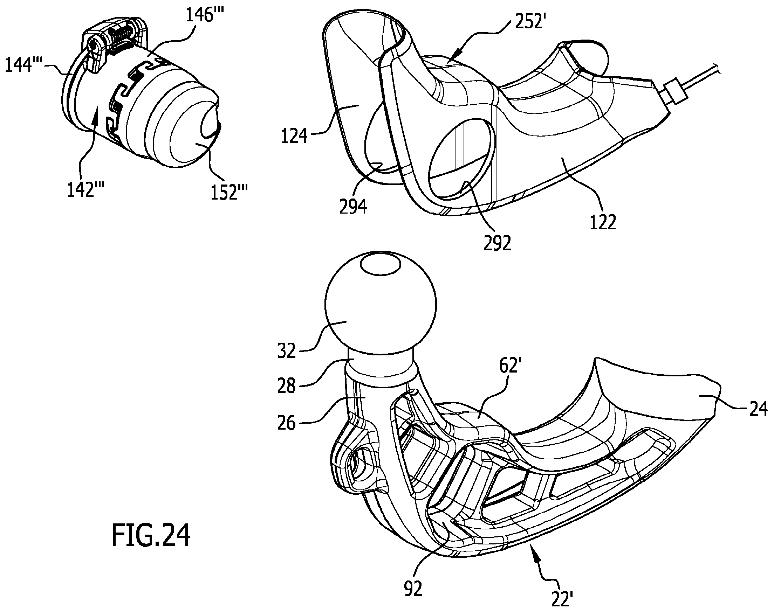

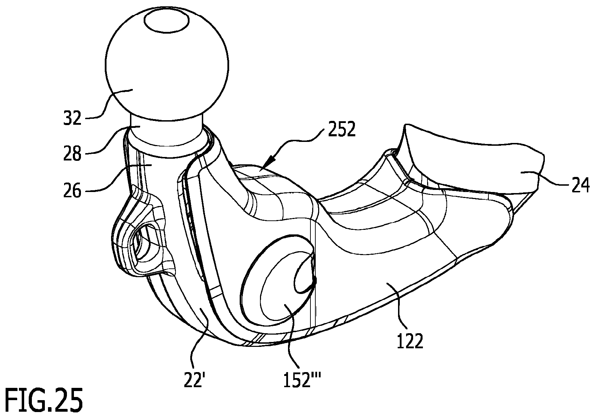

Bei einem dreizehnten Ausführungsbeispiel, dargestellt in den Fig. 24 und 25, ist die Abdeckeinheit 252' so ausgebildet, dass sie auch zur Aufnahme einer Kontakteinheit 142‴ geeignet ist, wobei in diesem Fall die Abdeckungen 122 und 124 Durchbrüche 292 und 294 aufweisen, durch welche die Kontakteinheit 142‴ mit dem Kontaktgehäuse 146‴ und der Deckeleinheit 152‴ dann hindurchsteckbar ist, wenn die Abdeckeinheit 252' auf die Strebenstruktur 62' aufgesetzt ist und diese umgekehrt U-förmig seitlich mit den Abdeckungen 122 und 124 umgreift.

Wird in diesem Fall die Kontakteinheit 142‴ in den Durchbruch 294 eingeführt, so kann sich diese durch den Freiraum 92 der Strebenstruktur 62' hindurcherstrecken und mit der Deckeleinheit 152‴ auch den Durchbruch 292 der Abdeckung 122 durchgreifen, so dass sich dadurch einerseits die Kontakteinheit 142‴ an der Abdeckeinheit 252 fixieren lässt und andererseits die Möglichkeit besteht, die Abdeckeinheit 252' in ihrer Position relativ zur Strebenstruktur 262' des Kugelhalses 22' dadurch zu fixieren, dass die Kontakteinheit 142‴ mit ihrem Kontaktgehäuse 146‴ den als Durchlass ausgebildeten Freiraum 92 durchgreift und somit ein Abheben der Abdeckeinheit 252 und Lösen von der Strebenstruktur 62' verhindert.

Vorzugsweise lässt sich die Kontakteinheit 142‴ mit dem Kontaktgehäuse 146‴ und der Deckeleinheit 152‴ relativ zu den Abdeckungen 122 und 124, insbesondere relativ zu den Durchbrüchen 292 und 294 durch Rastelemente oder beispielsweise auch eine Fügeverbindung dauerhaft fixieren, wie dies in Fig. 25 dargestellt ist.

Im Übrigen sind bei dem dreizehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

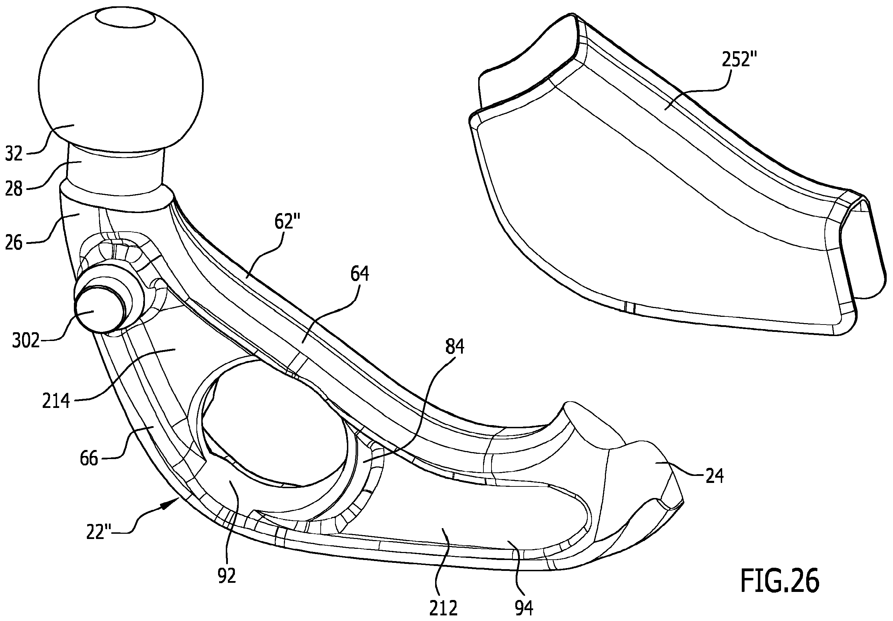

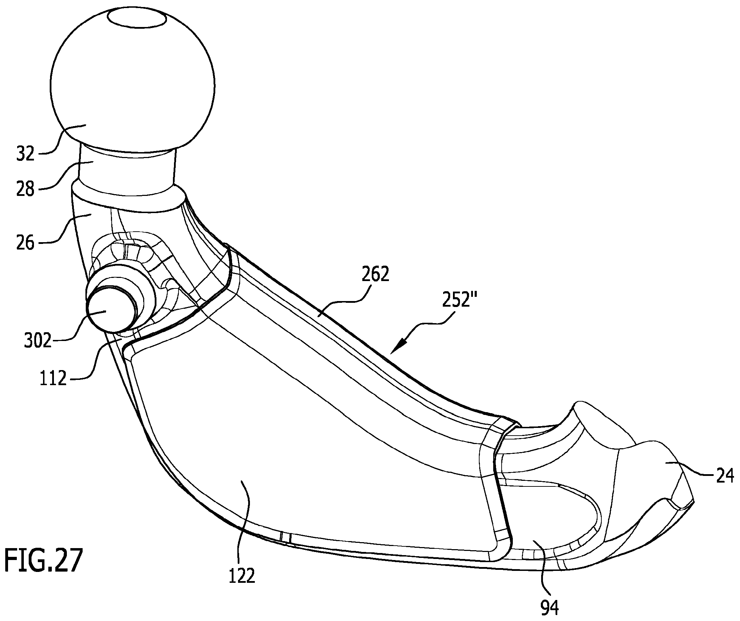

Bei einem vierzehnten Ausführungsbeispiel, dargestellt in den Fig. 26 und 27 ist die Strebenstruktur 62" sowohl mit der Längsstrebe 64 als auch der Längsstrebe 66 versehen, allerdings sind zwischen diesen Längsstreben Verbindungswände 212 und 214 vorgesehen, die die Längsstreben 64 und 66 miteinander verbinden, so dass lediglich der Freiraum 92 als Durchlass zwischen den Längsstreben 64 und 66 verbleibt.

Vorzugsweise besteht auch noch die Möglichkeit eine der Verbindungsstreben, beispielsweise die Verbindungsstrebe 84, zwischen den Längsstreben 64 und 66 vorzusehen.

Darüber hinaus sind am Endbereich 26 beiderseits, und zwar symmetrisch zur Mittelfläche 80 Tragzapfen 302 vorgesehen, welche beispielsweise gemäß der europäischen Patentanmeldung Nr. 2 759 421 A ausgebildet sind.

Auch auf diese Strebenstruktur 62" ist die Abdeckeinheit 252" aufsetzbar, die allerdings insoweit modifiziert ist, als diese die Freiräume 94 und 96 sowie 112 und 114 lediglich teilweise abdeckt.

Im Übrigen sind bei dem vierzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

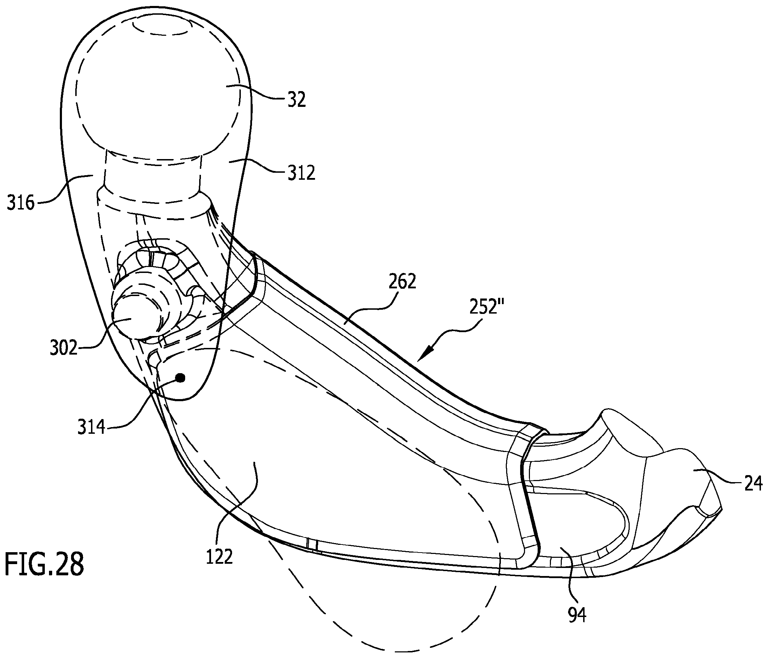

Bei einem fünfzehnten Ausführungsbeispiel, dargestellt in Fig. 28 ist an der Abdeckeinheit 252" insgesamt eine Schutzabdeckung 312 für die Kupplungskugel 32 und die Tragzapfen 302 vorgesehen, welche beispielsweise um eine Achse 314 relativ zur Abdeckeinheit 252" schwenkbar gelagert ist und in eine die Kupplungskugel 32 und die Tragzapfen 302 übergreifende Stellung schwenkbar ist oder zurückschwenkbar ist, in einer die Kupplungskugel 32 und den Tragzapfen 302 freigebende Stellung, so dass dadurch einerseits die Kupplungskugel 32 und die Tragzapfen 302 durch die Abdeckung so gekapselt sind, dass eine Bedienungsperson sich nicht an diesen stoßen und Verletzungen erleiden kann.

Vorzugsweise lässt sich dabei die Abdeckung wie in Fig. 28; stichpunktiert dargestellt, in eine Freigabestellung verschwenken, in welcher Seitenteile 316 der Schutzabdeckung 312 die Abdeckungen 122 und 124 übergreifen.

Im Übrigen sind bei dem fünfzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

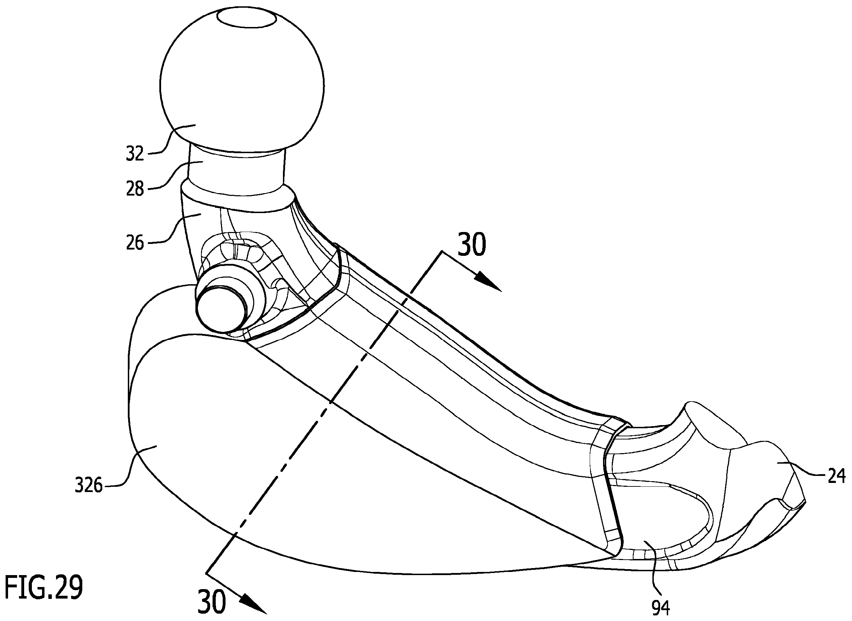

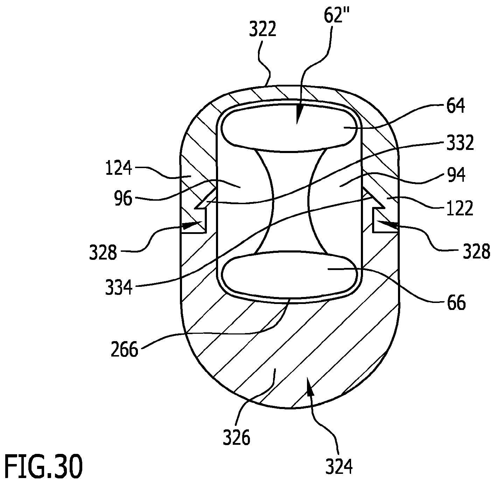

Bei einem sechzehnten Ausführungsbeispiel, dargestellt in Fig. 29 und Fig. 30 erfolgt ebenfalls eine Vollummantelung der Strebenstruktur 62", wobei eine Abdeckungseinheit 322 die obere Längsstrebe 64 und die seitlichen Freiräume 94 und 96 teilweise U-förmig übergreift, ähnlich der Abdeckeinheit 252, und außerdem eine die Längsstrebe 66 U-förmig übergreifende Abdeckung 324 die Abdeckeinheit 322 zur Bildung der seitlichen Abdeckungen 122, 124 ergänzt und auf der der Fahrbahn 34 zugewandten Unterseite 266 der Längsstrebe 66 aufliegt und dabei einen die Unterseite der Längsstrebe überdeckenden Stoßdämpferkörper 326 bildet, welcher durch ein elastisches Material der Abdeckeinheit 324 in diesem Bereich gebildet ist.

Somit bildet der Stoßdämpferkörper 326 einen Aufprallschutz für den Kugelhals 22", sofern das Kraftfahrzeug 10 gegen einen Gegenstand fährt oder gegebenenfalls mit dem Kugelhals 22 auf einer Bodenwelle der Fahrbahn 34 aufsitzt.

Vorzugsweise lassen sich dabei die Abdeckeinheiten 322 und 324 im Bereich der Seitenabdeckungen 122 und 124 mittels Rasteinheiten 328 miteinander verbinden, die beispielsweise an der Abdeckeinheit 324 angeordnete Rasthaken 332 aufweisen, welche in Rastausnehmungen 334 in der Abdeckeinheit 322 eingreifen.

Im Übrigen sind bei dem sechzehnten Ausführungsbeispiel diejenigen Elemente, die mit denen eines der voranstehenden Ausführungsbeispiele identisch sind, mit denselben Bezugszeichen versehen, so dass diesbezüglich auf die Ausführungen zu den voranstehenden Ausführungsbeispielen Bezug genommen werden kann.

## Patentansprüche

1. Anhängekupplung umfassend
eine fahrzeugfest montierte Montageeinheit (42)
eine an der Montageeinheit (42) gehaltene Lagereinheit (20), mit welcher ein erster Endbereich (24) einer Tragstruktur (60) eines Kugelhalses (22) verbunden ist,
und ein an einem zweiten Endbereich (26) der Tragstruktur (60) des Kugelhalses (22) angeordnetes Kuppelelement (32), insbesondere ausgebildet als Kupplungskugel,
wobei die Tragstruktur (60) des Kugelhalses (22) eine den ersten Endbereich (24) mit dem zweiten Endbereich (26) verbindende und den zweiten Endbereich (26) relativ zum ersten Endbereich (24) abstützende Strebenstruktur (62) umfasst, welche sich in Arbeitsstellung des Kugelhalses (22) beiderseits einer geometrischen und sich zu einer Mittelachse (58) des Kupplungselements (32) parallel erstreckenden Mittelfläche (80) ausdehnt und jeweils von einem Endbereich (24) zum anderen Endbereich (26) verlaufende Längsstreben (64, 66) aufweist, zwischen denen sich mindestens zwei quer zu den Längsstreben (64, 66) verlaufende Verbindungselemente (82, 84, 86, 88, 212, 214) erstrecken und wobei zwischen den Längsstreben (64, 66) mindestens zwei sich quer zu der geometrischen Mittelfläche (80) erstreckende Freiräume (92, 94, 96, 98, 112, 114, 116) liegen, **dadurch gekennzeichnet, dass** die der Fahrbahn (34) zugewandte Längsstrebe (66) mindestens einen Krümmungsbereich aufweist, dessen mindestens ein Krümmungsmittelpunkt (K2) auf einer der Fahrbahn (34) abgewandten Seite der der Fahrbahn (34) zugewandten Längsstrebe (66) liegt, dass die der Fahrbahn (34) abgewandte Längsstrebe (64) Krümmungsbereiche (72, 76) aufweist, deren Krümmungsmittelpunkte (K11, K13) auf einer der Fahrbahn (34) abgewandten Seite derselben liegen, dass beiderseits eines Verbindungselements (82, 84, 86, 88, 212, 214) jeweils mindestens ein sich quer zur Mittelfläche (80) erstreckender Freiraum (92, 94, 96, 98, 112, 114, 116) liegt, dass die Strebenstruktur (62) mit einer Verkleidung (120) versehen ist, dass die Verkleidung (120) mindestens eine struktursteife Abdeckung (122, 124) umfasst, und dass die mindestens eine Abdeckung (122, 124) an der Strebenstruktur (62) gehalten ist- und dass die Freiräume (92, 94, 96, 98) durch die mindestens eine Abdeckung (122, 124) überdeckt sind.

2. Anhängekupplung nach Anspruch 1, **dadurch gekennzeichnet, dass** eine in Arbeitsstellung des Kugelhalses (22) einer Fahrbahn (34) zugewandte Längsstrebe (66) eine größere Längenausdehnung aufweist als eine der Fahrbahn (34) abgewandte Längsstrebe (64), und/oder dass insbesondere die der Fahrbahn (34) zugewandte Längsstrebe (66) sich beiderseits der geometrischen Mittelfläche (80) erstreckt, dass insbesondere die der Fahrbahn (34) zugewandte Längsstrebe (66) sich symmetrisch zur geometrischen Mittelfläche (80) erstreckt.

3. Anhängekupplung nach einem der voranstehenden Ansprüche, **dadurch gekennzeichnet, dass** eine in der Arbeitsstellung der Fahrbahn (34) abgewandte Längsstrebe (64) sich beiderseits der geometrischen Mittelfläche (80) erstreckt, dass insbesondere die der Fahrbahn (34) abgewandte Längsstrebe (64) sich symmetrisch zur geometrische Mittelfläche (80) erstreckt.

4. Anhängekupplung nach einem der voranstehenden Ansprüche, **dadurch gekennzeichnet, dass** die der Fahrbahn (34) abgewandte Längsstrebe (64) mindestens einen Krümmungsbereich (74) aufweist, dessen Krümmungsmittelpunkt (K12) auf einer der Fahrbahn (34) zugewandten Seite der Längsstrebe (64) liegt.

5. Anhängekupplung nach einem der voranstehenden Ansprüche, **dadurch gekennzeichnet, dass** auf mindestens einer Seite eines Verbindungselements (82, 84, 86, 88, 212, 214) mindestens ein sich in der Strebenstruktur (62) quer zur Mittelfläche (80) erstreckender Freiraum (92, 94, 96, 98, 112, 114, 116) liegt.

6. Anhängekupplung nach einem der voranstehenden Ansprüche, **dadurch gekennzeichnet, dass** die Strebenstruktur (62) mindestens einen Freiraum (92) aufweist, der die Strebenstruktur (62) in Richtung quer zur Mittelfläche (80) insgesamt durchsetzt.

7. Anhängekupplung nach einem der voranstehenden Ansprüche, **dadurch gekennzeichnet, dass** die Strebenstruktur (62) mindestens einen Freiraum (94, 96) aufweist, welcher sich quer zu der Mittelfläche (80) erstreckt, jedoch durch eine sich zwischen den Längsstreben (64, 66) erstreckende und ein Verbindungselement bildende Verbindungswand (212, 214) der Strebenstruktur (62) abgeschlossen ist.

8. Anhängekupplung nach einem der voranstehenden Ansprüche, **dadurch gekennzeichnet, dass** mindestens einer der Freiräume (92, 94, 98) einen Aufnahmeraum für mindestens eine am Kugelhals (22) anzuordnende Funktionseinheit (142, 202) bildet.

9. Anhängekupplung nach Anspruch 89, **dadurch gekennzeichnet, dass** die mindestens eine Funktionseinheit eine Kontakteinheit (142) für eine Verbindung zwischen einem elektrischen Fahrzeugnetz und einem elektrischen Netz einer am Kuppelelement (32) ankuppelbaren Einheit ist, und/oder dass insbesondere die Funktionseinheit eine Betriebszustandserfassungseinheit (202) umfasst, und/oder dass insbesondere die Funktionseinheit (202) eine Anzeigesteuerung umfasst, und/oder dass insbesondere die Funktionseinheit eine Anzeigeeinheit (222) umfasst, und/oder dass insbesondere die Funktionseinheit eine Beleuchtungseinheit (270) umfasst, und/oder dass insbesondere die Funktionseinheit eine Projektionseinheit (280) umfasst.

10. Anhängekupplung nach einem der voranstehenden Ansprüche, **dadurch gekennzeichnet, dass** die Strebenstruktur (62) mit einer für die Strebenstruktur (62) nicht tragenden Verkleidung (120), versehen ist, dass insbesondere die Verkleidung (120) zumindest einen Teil der Freiräume (92, 94, 96, 98, 112, 114, 116) abdeckt.

11. Anhängekupplung nach Anspruch 10, **dadurch gekennzeichnet, dass** die Abdeckungen (122, 124) nichttragende Elemente des Kugelhalses (22) sind.

12. Anhängekupplung nach einem der voranstehenden Ansprüche, **dadurch gekennzeichnet, dass** die Verkleidung (120) mindestens zwei Abdeckungen (122, 124) umfasst, welche die Strebenstruktur (62) im Bereich ihrer beiderseitigen Außenkonturen (102, 104) überdecken, dass insbesondere mindestens ein Teil der Freiräume (92, 94, 96, 98, 112, 114, 116) durch beiderseits der Mittelfläche (80) und im Abstand von dieser Mittelfläche (80) verlaufende Abdeckungen (122, 124) überdeckt ist.

13. Anhängekupplung nach einem der voranstehenden Ansprüche, **dadurch gekennzeichnet, , dass** die mehreren Abdeckungen (122, 124) einzeln an der Strebenstruktur (62) gehalten sind.

14. Anhängekupplung nach einem der Ansprüche 11 bis 13, **dadurch gekennzeichnet, dass** die Abdeckungen (122, 124) durch eine mindestens einen der Freiräume (92, 96, 116) durchsetzende Verbindungseinheit (126, 128, 142) miteinander verbunden sind.

15. Anhängekupplung nach einem der voranstehenden Ansprüche, **dadurch gekennzeichnet, dass** mindestens ein Teil der Verbindungsstreben (82, 84, 86, 88) relativ zu der mindestens einen Abdeckung (122, 124) zurückgesetzt in der Strebenstruktur (62) verläuft, dass insbesondere die Strebenstruktur (62) Anlagenkonturen (132, 134, 136, 138) für die mindestens eine Abdeckung (122, 124) bildet, dass insbesondere die Strebenstruktur (62) für die Abdeckungen (122, 124) eine zusammenhängende Anlagekontur (132, 134, 136, 138) bildet, längs welcher die mindestens eine Abdeckung (122, 124) mit Anlagebereichen (133, 135, 137, 139) abschließend anliegen.

16. Anhängekupplung nach einem der Ansprüche 89 bis 15, **dadurch gekennzeichnet, dass** die mindestens eine Funktionseinheit (142, 202) an mindestens einer Abdeckung (122, 124) gehalten ist, dass insbesondere die mindestens eine Funktionseinheit (142, 202) mittels der Abdeckung (122, 124) relativ zu der Strebenstruktur (62) fixiert ist, dass insbesondere die Funktionseinheit (142) an mindestens zwei Abdeckungen (122, 124) gehalten ist, dass insbesondere die Funktionseinheit (142, 202) ein Verbindungselement zwischen den Abdeckungen (122, 142) darstellt, dass insbesondere die Verbindungseinheit zwischen den Abdeckungen (122, 124) durch ein Gehäuse einer Funktionseinheit (142) gebildet ist, und/oder dass insbesondere an der mindestens einen Abdeckung (122, 124) eine zu einer Sensoreinheit und/oder einer Funktionseinheit geführte elektrische Leitung gehalten ist, und/oder dass insbesondere an der mindestens einen Abdeckung (122, 124) ein Kontaktverbinderelement (158, 184, 206) gehalten ist, und/oder dass insbesondere mindestens eine Anzeigeeinheit an der mindestens einen Abdeckung (122, 124) gehalten ist.

## Claims

1. Trailer coupling comprising
a mounting unit (42) mounted securely on the vehicle,
a bearing unit (20) held on the mounting unit (42), a first end area (24) of a carrier structure (60) of a ball neck (22) being connected to said bearing unit,
and a coupling element (32), designed, in particular, as a coupling ball, arranged at a second end area (26) of the carrier structure (60) of the ball neck (22),
wherein the carrier structure (60) of the ball neck (22) comprises a strut structure (62) connecting the first end area (24) to the second end area (26) and supporting the second end area (26) relative to the first end area (24), said strut structure extending on both sides of a geometrical central area (80) running parallel to a central axis (58) of the coupling element (32) in the operative position of the ball neck (22) and said strut structure having longitudinal struts (64, 66) each extending from one end area (24) to the other end area (26), at least two connecting elements (82, 84, 86, 88, 212, 214) running transversely to the longitudinal struts (64, 66) extending between said longitudinal struts and wherein at least two free spaces (92, 94, 96, 98, 112, 114, 116) extending transversely to the geometrical central area (80) are located between the longitudinal struts (64, 66), **characterized in that** the longitudinal strut (66) facing the roadway (34) has at least one curved area, the at least one centre of curvature (K2) thereof being located on a side facing away from the roadway (34) of the longitudinal strut (66) facing the roadway (34), **in that** the longitudinal strut (64) facing away from the roadway (34) has curved areas (72, 76), the centres of curvature (K11, K13) thereof being located on a side thereof facing away from the roadway (34), **in that** at least one free space (92, 94, 96, 98, 112, 114, 116) extending transversely to the central area (80) is located each time on either side of a connecting element (82, 84, 86, 88, 212, 214), **in that** the strut structure (62) is provided with a casing (120), **in that** the casing (120) comprises at least one structure-rigid cover (122, 124), and **in that** the at least one cover (122, 124) is held on the strut structure (62), and **in that** the free spaces (92, 94, 96, 98) are covered by the at least one cover (122, 124).

2. Trailer coupling as defined in claim 1, **characterized in that** a longitudinal strut (66) facing a roadway (34) in the operative position of the ball neck (22) has a greater longitudinal extension than a longitudinal strut (64) facing away from the roadway (34), and/or that, in particular, the longitudinal strut (66) facing the roadway (34) extends on both sides of the geometrical central area (80), that, in particular, the longitudinal strut (66) facing the roadway (34) extends symmetrically to the geometrical central area (80).

3. Trailer coupling as defined in any one of the preceding claims, **characterized in that** a longitudinal strut (64) facing away from the roadway (34) in the operative position extends on both sides of the geometrical central area (80), that, in particular, the longitudinal strut (64) facing away from the roadway (34) extends symmetrically to the geometrical central area (80).

4. Trailer coupling as defined in any one of the preceding claims, **characterized in that** the longitudinal strut (64) facing away from the roadway (34) has at least one curved area (74), the centre of curvature (K12) thereof being located on a side of the longitudinal strut (64) facing the roadway (34).

5. Trailer coupling as defined in any one of the preceding claims, **characterized in that** at least one free space (92, 94, 96, 98, 112, 114, 116) extending in the strut structure (62) transversely to the central area (80) is located on at least one side of a connecting element (82, 84, 86, 88, 212, 214).

6. Trailer coupling as defined in any one of the preceding claims, **characterized in that** the strut structure (62) has at least one free space (92) passing altogether through the strut structure (62) in a direction transverse to the central area (80).

7. Trailer coupling as defined in any one of the preceding claims, **characterized in that** the strut structure (62) has at least one free space (94, 96) extending transversely to the central area (80) but is closed by a connecting wall (212, 214) of the strut structure (62) extending between the longitudinal struts (64, 66) and forming a connecting element.

8. Trailer coupling as defined in any one of the preceding claims, **characterized in that** at least one of the free spaces (92, 94, 98) forms a receptacle for at least one functional unit (142, 202) to be arranged on the ball neck (22).

9. Trailer coupling as defined in claim 8, **characterized in that** the at least one functional unit is a contact unit (142) for a connection between an electrical vehicle power supply and an electrical power supply of a unit connectable to the dome element (32), and/or that, in particular, the functional unit comprises a detection unit (202) for the operating state, and/or that, in particular, the functional unit (202) comprises a display control, and/or that, in particular, the functional unit comprises a display unit (222), and/or that, in particular, the functional unit comprises a lighting unit (270), and/or that, in particular, the functional unit comprises a projection unit (280).

10. Trailer coupling as defined in any one of the preceding claims, **characterized in that** the strut structure (62) is provided with a casing (120) non-bearing for the strut structure (62), that, in particular, the casing (120) covers at least a portion of the free spaces (92, 94, 96, 98, 112, 114, 116).

11. Trailer coupling as defined in claim 10, **characterized in that** the covers (122, 124) are non-bearing elements of the ball neck (22).

12. Trailer coupling as defined in any one of the preceding claims, **characterized in that** the casing (120) comprises at least two covers (122, 124) covering the strut structure (62) in the region of its outer contours (102, 104) on both sides, that, in particular, at least a portion of the free spaces (92, 94, 96, 98, 112, 114, 116) is covered by covers (122, 124) extending on both sides of the central area (80) and at a distance from this central area (80).

13. Trailer coupling as defined in any one of the preceding claims, **characterized in that** the several covers (122, 124) are held on the strut structure (62) individually.

14. Trailer coupling as defined in any one of claims 11 to 13, **characterized in that** the covers (122, 124) are connected to one another by a connecting unit (126, 128, 142) passing through at least one of the free spaces (92, 96, 116).

15. Trailer coupling as defined in any one of the preceding claims, **characterized in that** at least some of the connecting struts (82, 84, 86, 88) extend in the strut structure (62) in a manner set back relative to the at least one cover (122, 124), that, in particular, the strut structure (62) forms abutment contours (132, 134, 136, 138) for the at least one cover (122, 124), that, in particular, the strut structure (62) forms a continuous abutment contour (132, 134, 136, 138) for the covers (122, 124), the at least one cover (122, 124) abutting on said contour with abutment areas (133, 135, 137, 139) in a closed manner.

16. Trailer coupling as defined in any one of claims 8 to 15, **characterized in that** the at least one functional unit (142, 202) is held on at least one cover (122, 124), that, in particular, the at least one functional unit (142, 202) is fixed in place relative to the strut structure (62) by way of the cover (122, 124), that, in particular, the functional unit (142) is held on at least two covers (122, 124), that, in particular, the functional unit (142, 202) represents a connecting element between the covers (122, 124), that, in particular, the connecting unit is formed between the covers (122, 124) by a housing of one functional unit (142), and/or that, in particular, an electric cable leading to a sensor unit and/or a functional unit is held on the at least one cover (122, 124), and/or that, in particular, a contact connector element (158, 184, 206) is held on the at least one cover (122, 124), and/or that, in particular, at least one display unit is held on the at least one cover (122, 124).

## Revendications

1. Attelage comprenant
une unité de montage (42) montée de manière fixée au véhicule
une unité palier (20), maintenue à l'unité de montage (42), avec laquelle une première zone d'extrémité (24) est reliée à une structure de support (60) d'un col de boule d'attelage (22),
et un élément d'attelage (32), en particulier réalisé sous la forme d'une boule d'attelage, disposé au niveau d'une deuxième zone d'extrémité (26) de la structure de support (60) du col de boule d'attelage (22),
dans lequel la structure de support (60) du col de boule d'attelage (22) comprend une structure à entretoises (62), reliant la première zone d'extrémité (24) à la deuxième zone d'extrémité (26) et soutenant la deuxième zone d'extrémité (26) par rapport à la première zone d'extrémité (24), laquelle, dans la position de travail du col de boule d'attelage (22), s'étend des deux côtés d'une surface médiane (80) géométrique, la surface médiane s'étendant parallèlement à un axe médian (58) de l'élément d'attelage (32), et la structure à entretoises présente des entretoises longitudinales (64, 66) s'étendant d'une zone d'extrémité (24) à l'autre zone d'extrémité (26), entre lesquelles s'étendent au moins deux éléments de liaison (82, 84, 86, 88, 212, 214) s'étendant transversalement par rapport aux entretoises longitudinales (64, 66) et dans lequel au moins deux espaces libres (92, 94, 96, 98, 112, 114, 116) s'étendant transversalement par rapport à la surface médiane (80) géométrique et se situent entre les entretoises longitudinales (64, 66), **caractérisé en ce que** l'entretoise longitudinale (66) tournée vers la chaussée (34) présente au moins une zone de courbure, dont au moins un centre de courbure (K2) se situe sur une face, opposée à la chaussée (34), de l'entretoise longitudinale (66) tournée vers la chaussée (34), que l'entretoise longitudinale (64) opposée à la chaussée (34) présente des zones de courbure (72, 76), dont les centres de courbure (K11, K13) se situent sur une face, opposée à la chaussée (34), de celle-ci, que respectivement au moins un espace libre (92, 94, 96, 98, 112, 114, 116) s'étendant transversalement par rapport à la surface médiane (80) se situe des deux côtés d'un élément de liaison (82, 84, 86, 88, 212, 214), que la structure à entretoises (62) est pourvue d'un revêtement (120), que le revêtement (120) comprend au moins un cache (122, 124) de structure rigide, et que l'au moins un cache (122, 124) est maintenu à la structure à entretoises (62) et que les espaces libres (92, 94, 96, 98) sont recouverts par l'au moins un cache (122, 124).

2. Attelage selon la revendication 1, **caractérisé en ce qu'**une entretoise longitudinale (66) tournée vers une chaussée (34) dans la position de travail du col de boule d'attelage (22) présente une plus grande étendue longitudinale qu'une entretoise longitudinale (64) opposée à la chaussée (34), et/ou qu'en particulier l'entretoise longitudinale (66) tournée vers la chaussée (34) s'étend des deux côtés de la surface médiane (80) géométrique, qu'en particulier l'entretoise longitudinale (66) tournée vers la chaussée (34) s'étend de manière symétrique par rapport à la surface médiane (80) géométrique.

3. Attelage selon l'une quelconque des revendications précédentes, **caractérisé en ce qu'**une entretoise longitudinale (64) opposée à la chaussée (34) dans la position de travail s'étend des deux côtés de la surface médiane (80) géométrique, qu'en particulier l'entretoise longitudinale (64) opposée à la chaussée (34) s'étend de manière symétrique par rapport à la surface médiane (80) géométrique.

4. Attelage selon l'une quelconque des revendications précédentes, **caractérisé en ce que** l'entretoise longitudinale (64) opposée à la chaussée (34) présente au moins une zone de courbure (74), dont le centre de courbure (K12) se situe sur une face, tournée vers la chaussée (34), de l'entretoise longitudinale (64).

5. Attelage selon l'une quelconque des revendications précédentes, **caractérisé en ce qu'**au moins un espace libre (92, 94, 96, 98, 112, 114, 116) s'étendant dans la structure à entretoises (62) transversalement par rapport à la surface médiane (80) se situe sur au moins une face d'un élément de liaison (82, 84, 86, 88, 212, 214).

6. Attelage selon l'une quelconque des revendications précédentes, **caractérisé en ce que** la structure à entretoises (62) présente au moins un espace libre (92), qui traverse dans son ensemble la structure à entretoises (62) dans une direction transversale par rapport à la surface médiane (80).

7. Attelage selon l'une quelconque des revendications précédentes, **caractérisé en ce que** la structure à entretoises (62) présente au moins un espace libre (94, 96), lequel s'étend transversalement par rapport à la surface médiane (80), mais est terminé par une paroi de liaison (212, 214), s'étendant entre les entretoises longitudinales (64, 66) et formant un élément de liaison, de la structure à entretoises (62).

8. Attelage selon l'une quelconque des revendications précédentes, **caractérisé en ce qu'**au moins un des espaces libres (92, 94, 98) forme un espace de réception pour au moins une unité fonctionnelle (142, 202) à disposer au niveau du col de boule d'attelage (22).

9. Attelage selon la revendication 8, **caractérisé en ce que** l'au moins une unité fonctionnelle est une unité de contact (142) pour une liaison entre un réseau de véhicule électrique et un réseau électrique d'une unité pouvant être attelée à l'élément d'attelage (32), et/ou qu'en particulier l'unité fonctionnelle comprend une unité de détection d'état de fonctionnement (202), et/ou qu'en particulier l'unité fonctionnelle (202) comprend une commande d'affichage, et/ou qu'en particulier l'unité fonctionnelle comprend une unité d'affichage (222), et/ou qu'en particulier l'unité fonctionnelle comprend une unité d'éclairage (270), et/ou qu'en particulier l'unité fonctionnelle comprend une unité de projection (280).

10. Attelage selon l'une quelconque des revendications précédentes, **caractérisé en ce que** la structure à entretoises (62) est pourvue d'un revêtement (120) non porteur pour la structure à entretoises (62), qu'en particulier le revêtement (120) recouvre au moins une partie des espaces libres (92, 94, 96, 98, 112, 114, 116).

11. Attelage selon la revendication 10, **caractérisé en ce que** les caches (122, 124) sont des éléments non porteurs du col de boule d'attelage (22).

12. Attelage selon l'une quelconque des revendications précédentes, **caractérisé en ce que** le revêtement (120) comprend au moins deux caches (122, 124), lesquels recouvrent la structure à entretoises (62) dans la zone des contours extérieurs (102, 104) bilatéraux de celle-ci, qu'en particulier au moins une partie des espaces libres (92, 94, 96, 98, 112, 114, 116) est recouverte par des caches (122, 124) s'étendant des deux côtés de la surface médiane (80) et à distance de cette surface médiane (80).

13. Attelage selon l'une quelconque des revendications précédentes, **caractérisé en ce que** les différents caches (122, 124) sont maintenus de manière individuelle à la structure à entretoises (62).

14. Attelage selon l'une quelconque des revendications 11 à 13, **caractérisé en ce que** les caches (122, 124) sont reliés les uns aux autres par une unité de liaison (126, 128, 142) traversant au moins un des espaces libres (92, 96, 116).

15. Attelage selon l'une quelconque des revendications précédentes, **caractérisé en ce qu'**au moins une partie des entretoises de liaison (82, 84, 86, 88) s'étend par rapport à l'au moins un cache (122, 124) en retrait dans la structure à entretoises (62), qu'en particulier la structure à entretoises (62) forme des contours d'appui (132, 134, 136, 138) pour l'au moins un cache (122, 124), qu'en particulier la structure à entretoises (62) pour les caches (122, 124) forme un contour d'appui (132, 134, 136, 138) d'un seul tenant, le long duquel l'au moins un cache (122, 124) s'applique par terminaison avec des zones d'appui (133, 135, 137, 139).

16. Attelage selon l'une quelconque des revendications 8 à 15, **caractérisé en ce que** l'au moins une unité fonctionnelle (142, 202) est maintenue à au moins un cache (122, 124), qu'en particulier l'au moins une unité fonctionnelle (142, 202) est fixée au moyen du cache (122, 124) par rapport à la structure à entretoises (62), qu'en particulier l'unité fonctionnelle (142) est maintenue à au moins deux caches (122, 124), qu'en particulier l'unité fonctionnelle (142, 202) représente un élément de liaison entre les caches (122, 142), qu'en particulier l'unité de liaison entre les caches (122, 124) est formée par un boîtier d'une unité fonctionnelle (142), et/ou qu'en particulier une ligne électrique guidée vers une unité capteur et/ou une unité fonctionnelle est maintenue en particulier à l'au moins un cache (122, 124), et/ou qu'en particulier un élément connecteur de contact (158, 184, 206) est maintenu à l'au moins un cache (122, 124) et/ou qu'en particulier au moins une unité d'affichage est maintenue à l'au moins un cache (122, 124).
